# FASCICULE DE BREVET EUROPEEN

(11) **EP 3 746 600 B1**
(45) Date de publication et mention de la délivrance du brevet: **27.04.2022**
(21) Numéro de dépôt: 19709543.3
(22) Date de dépôt: 29.01.2019
(51) Int. Cl.: E01F 8/00

(54) **ELEMENT DE CONSTRUCTION POUR L'ASSAINISSEMENT DU MILIEU URBAIN ROUTIER ET SYSTÈME DE PROTECTION**
BAUELEMENT ZUR REGENERATION EINER STADTSTRASSENUMGEBUNG UND SCHUTZSYSTEM
BUILDING ELEMENT FOR REGENERATION OF URBAN ROAD ENVIRONMENT AND PROTECTION SYSTEM

(30) Priorité: 29.01.2018 FR 1850654
(43) Date de publication de la demande: 09.12.2020
(73) Titulaire: La Ville Propre, 67000 Strasbourg (FR); SICAT, 75009 Paris (FR); CENTRE NATIONAL DE LA RECHERCHE SCIENTIFIQUE, 75794 Paris Cedex 16 (FR); Université de Strasbourg, 67081 Strasbourg Cedex (FR)
(72) Inventeur: MASQUIDA, Jean Paul, 67000 Strasbourg (FR); HERAUD, Jean Alain, 67000 Strasbourg (FR); LAURENT, Julien, 67000 Strasbourg (FR); PHAM, Charlottte, 67000 Strasbourg (FR); JELTSCH, Jean-Marc, 67120 Molsheim (FR); BA, Housseinou, 67200 Strasbourg (FR); MILLET, Maurice, 67460 Souffelweyersheim (FR); PHAM-HUU, Cuong, 67100 Strasbourg (FR); MULLER, Emmanuel, 67100 Strasbourg (FR); MASQUIDA, Benoît, 67000 Strasbourg (FR)
(74) Mandataire: Schmidt, Martin Peter
(86) Numéro de dépôt international: PCT/FR2019/050192
(87) Numéro de publication internationale: WO 2019/145659

(56) Documents cités:
- EP-A1- 1 632 607
- EP-A1- 2 055 838
- EP-A2- 0 624 560
- FR-A1- 2 713 254
- JP-A- 2003 313 827
- KR-A- 20100 120 109
- KR-B1- 100 864 005
- US-A1- 2017 137 322
- US-B1- 6 352 578

## Description

### Domaine technique de l'invention

L'invention concerne le domaine du génie civil, et plus particulièrement la construction et l'aménagement de voies de circulation pour véhicules à moteur en milieu ouvert ou souterrain. L'invention porte sur des éléments de construction installés en bordure de voies de circulation routière ou ferroviaire, notamment en milieu urbain, tels que les murs anti-bruit et les séparateurs de voies permanents ou temporaires. L'invention porte également sur les dispositifs de dépollution de l'air dans l'espace public, et en particulier dans l'espace urbain.

### Etat de la technique

La pollution de l'air dans l'espace urbain est devenue un problème de santé publique. Cette pollution comprend notamment des particules (poussières), de toutes tailles, et des polluants gazeux. Son origine peut être anthropogène ou naturelle ; en milieu urbain elle est pour la plus grande partie anthropogène, et plus précisément liée aux véhicules à moteur (combustion d'hydrocarbures liquides, pneumatiques, abrasion des revêtements de la route, systèmes de freinage à friction), à l'industrie, à l'agriculture et au chauffage par combustion de charbon, de bois ou hydrocarbures liquides. Cette pollution pose un problème de santé publique qui est bien connu, mais dont on se rend compte ces dernières années qu'il a été sous-estimé à la fois dans son ampleur et dans sa gravité. L'assainissement pluvial de l'air ne suffit plus aujourd'hui pour garantir un air respirable tandis que dans les espaces souterrains la pollution particulaire atteint des proportions dangereuses. A défaut de mesures efficaces pour éviter le relâchement de polluants et poussières dans l'atmosphère urbaine et dans les espaces souterrains, il serait désirable de pouvoir purifier l'air pollué à proximité immédiate des sources de pollution.

Un grand nombre de dispositifs de dépollution de l'air ambiant ont été décrits dans la littérature brevet. Il peut s'agir de systèmes à piégeage actif, en intégrant un système de circulation d'air tel qu'un aspirateur, ou à piégeage passif, sans aspiration artificielle utilisant un moteur.

Un système à piégeage actif a été proposé de manière conceptuelle dans DE 35 25711 (Buske) et DE 10 2006 052 541 (Schüler) : l'air est aspiré à travers les bouches de canalisation des eaux pluviales et conduit vers un poste de purification centralisé. WO 2008/102383 (Mix Progretti) décrit un système d'épuration de l'air ambiant des villes par une circulation forcée au travers d'un milieu filtrant, qui se présente sous la forme d'une machine intégrée comprenant le poste de lavage des cartouches de filtration à l'eau ; l'eau et la boue sont collectées dans un bac de collecte qui doit être vidé périodiquement.

Les systèmes passifs évitent le recours à une infrastructure de gestion des fluides. Dans le commerce il existe des compositions de ciment dans lesquelles des particules de dioxyde de titane agissant comme photo-catalyseur oxydant convertissent les oxydes d'azote en nitrates sous l'effet du rayonnement ultraviolet. WO 2009/056492 (Icopal) décrit des panneaux de revêtement mural comportant une couche de granules de dioxyde de titane de type anatase, ces granules ayant un diamètre précis (0,3 mm à 1,6 mm). EP 2 354 305 (Franz Carl Nüdling Basaltwerke) propose d'incorporer le dioxyde de titane dans un revêtement routier.

L'effet dépolluant du dioxyde de titane, incorporé dans le béton ou dans un revêtement de surface, est assez faible, sauf en plein soleil, et si l'oxydation photo-catalytique est incomplète la réaction photo-catalytique conduit à la conversion du NO en NO₂, qui est environ quatre fois plus toxique que le NO. Dans le cadre du projet LIGHT2CAT de la Commission Européenne des particules de dioxyde de titane modifiées ont été développées qui effectuent cette réaction sous l'effet de la lumière visible. Un grand nombre de brevets décrivent d'autres améliorations des photo-catalyseurs à base de dioxyde de titane pour application murale. A titre d'exemple, WO 2009/121396 propose d'enrober des particules d'oxyde de fer avec du dioxyde de titane pour améliorer la stabilité de l'effet photo-catalytique. EP 1 642 643 (Eurovia) décrit un parement anti-bruit revêtu avec un ciment comprenant du dioxyde de titane et un matériau acoustique, tel que les copeaux de bois, les billes de caoutchouc, les billes d'argile.

Cela ne répond toutefois pas au problème qu'en l'absence de soleil direct ces photo-catalyseurs ne peuvent pas fonctionner. Pour résoudre ce problème le document WO 2011/045509 (Lafarge) décrit une composition de béton comprenant du charbon actif ou une silice poreuse capable de traiter les oxydes d'azote et autres polluants gazeux sans avoir recours à la photo-catalyse. Cependant, tous ces nouveaux bétons visent uniquement les polluants gazeux, ils ne détruisent pas les particules minérales qui constituent les principales fractions des poussières en milieu urbain.

WO 2007/100254 (Technische Universiteit Delft) décrit un dispositif de captage de poussière générant un champ électrostatique, destiné à être intégré dans des équipements routiers (poteaux, lanternes, éléments de construction (tunnel, mur anti-bruit)). JP 2003-313827 (Sekisui Jushi Co Ltd) décrit un système de filtration pour capter des poussières qui est monté sur un mur anti-bruit et qui comprend une couche d'adsorption en fibres synthétiques ; on peut ajouter un dispositif de captage électrostatique. Il n'est pas clair comment un tel système électrostatique destiné à être installé à l'extérieur peut fonctionner en cas de temps pluvieux.

KR 2010/0120109 décrit un mur anti-bruit doté d'un milieu filtrant en charbon actif. Ce document ne comporte cependant pas d'enseignement sur la possibilité de régénérer un tel filtre. KR 1008/64005 propose un autre système de ce type pourvu de buses pour pulvériser de l'eau afin de nettoyer la paroi externe du mur anti-bruit, mais rien n'est prévu pour nettoyer le filtre en charbon actif qui est noyé dans le mur. Ces charbons actifs sont des milieux utilisés pour l'absorption de gaz ; leur volume poreux est essentiellement de nature microporeuse.

D'autres systèmes de captation de particules intégrés dans un mur anti-bruit sont connus de EP 1 632 607 et EP 1 013 831.

On connaît également les murs végétalisés, dont EP 2 821 985 (Green City Solutions) décrit un mode de réalisation particulier sous la forme d'un élément de mobilier urbain; c'est une solution esthétique mais coûteuse, qui nécessite une maintenance régulière, et qui ne peut pas être utilisée partout. WO 2007/028348 (Thömen & Körner) décrit des panneaux revêtus de mousses ou lichens, qui diminuent la teneur en poussières fines dans l'air, et qui peuvent être colonisés de certains microorganismes susceptibles de digérer certains types de particules fixées à leur surface. WO 2006/079914 (Valenti) propose la combinaison de deux microbes aérobies, l'un nitrifiant, l'autre dénitrifiant, ces microbes étant déposés sur la surface de panneaux rigides mais poreux ou fibreux.

Ces dispositifs de dépollution sont peu efficaces pour réduire le taux de particules dans l'air, et ne permettent pas de lutter de manière efficace contre le bruit. Certains d'entre eux nécessitent une maintenance régulière, d'autre se présentent sous la forme d'un revêtement de surface blanc, assez coûteux au demeurant, dont l'aspect peut se dégrader au cours du temps.

Un problème particulier réside dans les particules sédimentées qui sont remises en suspension par le courant généré par le passage de véhicules. Les particules sédimentées présentent des propriétés physico-chimiques différentes de celles des particules initialement relâchées dans l'atmosphère par la source de pollution (ces particules sont appelées « particules primaires »). En effet, lors de leur période de sédimentation les particules primaires peuvent capter d'autres polluants, soit par agrégation solide-solide directe soit par condensation de gouttelettes d'eau saturées avec d'autres polluants : on s'attend à une dangerosité toxicologique accrue de ces particules remises en suspension à cause de la présence d'autres composés à leur surface.

Le problème que la présente invention cherche à résoudre est de présenter un dispositif simple et facilement régénérable qui permet de lutter à la fois contre les particules provenant de la circulation routière et ferroviaire, qu'il s'agisse de particules primaires générées par les véhicules ou de particules remises en suspension par leur circulation, et contre le bruit généré par cette circulation.

Un autre problème que la présente invention cherche à résoudre est de présenter des milieux filtrants pouvant être réalisés sous la forme macroscopique voulue, et qui permettent de capter de manière efficace les particules contenus dans l'air ambiant, par exemple à proximité des voies de circulation routière ou ferroviaire, et qui peuvent être régénérés facilement.

### Objets de l'invention

Les inventeurs ont trouvé que l'association d'au moins un récipient (typiquement un panier ajouré ou en grillage) enfermant une masse d'air en circulation et d'un système de piégeage des particules et de réduction du bruit en un seul élément de construction permet de résoudre le problème posé. Le piégeage de particules est réalisé par un milieu actif qui est un milieu filtrant. La géométrie de l'ensemble est conçue, avec une accessibilité du milieu actif par tous les côtés, pour que tous les mouvements d'air soient amenés à toucher la surface des récipients et à accéder au milieu actif contenu dans les récipients.

Plus précisément, selon l'invention, le problème est résolu par un élément de construction, notamment pour milieu urbain routier, destiné à purifier l'air et à amortir le bruit émis par une source de bruit à proximité de voies de circulation routière ou ferroviaire, caractérisé en ce que ledit élément de construction comprend : un support rigide présentant d'une part une paroi définissant une première face destinée à être tournée vers ladite source de bruit, et présentant d'autre part une deuxième face destinée à être opposée à ladite source de bruit ; ledit support étant muni d'au moins un récipient comprenant un milieu actif. Ledit au moins un récipient est disposé du côté de la face de ladite paroi tournée vers ladite source de bruit. Ledit récipient doit permettre à l'air ambiant d'accéder au milieu actif qu'il contient au travers de l'ensemble de ses surfaces extérieures.

Selon des caractéristiques essentielles de l'invention, ledit récipient prend la forme d'un panier présentant une face creuse, ladite face creuse étant dirigée vers ladite première face de ladite paroi, et ledit élément de construction présente un espace d'air entre ledit récipient et ladite première face de ladite paroi dirigée vers la source de bruit. Cette disposition a deux effets techniques : d'une part, elle conduit à la fixation d'une masse d'air entre le creux du récipient et la paroi qui réfléchit les ondes acoustiques dans la direction du creux du récipient ; cela améliore l'atténuation desdites ondes acoustique dans le milieu actif du récipient. D'autre part, elle facilite l'échange d'air entre le milieu filtrant du récipient et l'air ambiant par des effets d'amortissement, sachant que le passage d'un véhicule engendre un courant d'air, qui est typiquement turbulent ; cela améliore l'effet filtrant du récipient.

Avantageusement l'élément de construction selon l'invention comprend une pluralité de récipients disposés à des distances différentes de ladite paroi ; cela renforce l'effet d'amortissement acoustique.

Ledit milieu actif comporte un milieu filtrant et présent avantageusement des cavités. Les cavités permettent un accès de l'air ambiant à la surface géométrique (et aussi au moins en partie à la surface spécifique) du milieu actif : elles débouchent, directement ou indirectement, sur l'extérieur. Elles renforcent l'effet purifiant. Dans un mode de réalisation ledit milieu actif comporte des pièces ou morceaux (ces deux termes étant utilisés ici de manière synonyme) qui sont disposées dans ledit récipient ; ainsi se forment par l'empilement de pièces des cavités entre les pièces qui facilitent l'accès de l'air ambiant audit milieu actif et améliore l'efficacité de filtration. On préfère que lesdites pièces ou morceaux se trouvent dans le récipient dans une orientation désordonnée ; cela renforce l'effet d'amortissement acoustique, qui représente une deuxième fonction dudit milieu actif.

Lesdites pièces dudit milieu actif peuvent se présenter notamment sous la forme de billes, de granules, de cylindres, de tiges, de coudes, d'anneaux, de barillets, de trilobes, de multilobes, de tetrapodes ou de selles, avec une préférence pour les formes non sphériques. Elles peuvent être identiques ou différentes. Elles peuvent être de forme identique ou de formes différentes, et peuvent avoir des dimensions identiques ou différentes. Dans un mode de réalisation elles ne sont pas toutes identiques et n'ont pas toutes la même forme. Dans un autre mode de réalisation ces pièces peuvent être au moins partiellement creuses avec une cavité qui débouche sur la surface géométrique desdites pièces. L'irrégularité de forme des pièces ou morceaux contribue à l'effet d'amortissement acoustique et facilite la circulation et la diffusion d'air à travers le milieu à porosité ouverte. Les pièces ou morceaux peuvent être en mousse alvéolaire ou monolithiques contenant des cavités connectées entre elles pour former une structure creuse.

Avantageusement leur plus grande dimension extérieure (ou « dimension extérieure maximale ») est comprise entre 0,2 cm et 5,0 cm, préférentiellement comprise entre 0,3 cm et 4,0 cm, plus préférentiellement entre 0,4 cm et 3,0 cm, et encore plus préférentiellement comprise entre 0,5 cm et 2,0 cm. Ces dimensions, associées à la forme préférentiellement creuse des pièces, permettent d'atteindre un taux de vide correspondant au volume des cavités, calculé par rapport au volume total du milieu actif (pièces + cavités), élevé afin de faciliter la circulation du gaz à dépolluer. Dans le même but on peut également utiliser des pièces de faible symétrie, mais les pièces présentant une cavité ouverte (telle que des anneaux) sont préférées. Dans un mode de réalisation le taux de vide de l'empilement des pièces est compris entre environ 26 %, ce qui correspond à l'empilement compact de billes de même taille, et environ 75 %. Avantageusement ce taux de vide est d'au moins 35 %, plus préférentiellement d'au moins 45 % ; encore plus préférentiellement d'au moins 55 %. Ces dimensions, associées à la forme préférentiellement creuse (et possiblement peu symétrique) des pièces, permettent également d'atteindre une surface géométrique développée élevée afin de maximiser la rétention des poussières en surface des pièces. Dans un mode de réalisation l'empilement des pièces développe une surface géométrique d'au moins 0,5 m² par litre, de préférence supérieure à 1 m² par litre et encore plus préférentiellement supérieure à 1,5 m² par litre.

Dans un mode de réalisation les pièces ou morceaux constituant ledit milieu actif présentent en leur surface une rugosité apte à retenir les particules en suspension dans l'air. Cette rugosité de surface peut être définie par le paramètre Ra (défini dans la norme ISO 4287) et qui correspond à la rugosité moyenne arithmétique du profil. Elle est avantageusement comprise entre 50 nm et 20 microns, de préférence entre 100 nm et 10 microns, et encore plus préférentiellement entre 500 nm et 5 microns.

Dans un mode de réalisation préféré, ledit milieu actif présente une porosité ouverte, accessible à l'air. Cette porosité ouverte peut être notamment une micro-porosité et/ou une méso-porosité et/ou une macro-porosité, et/ou elle peut comporter des alvéoles ouvertes. Les pièces constituant ledit milieu actif peuvent présenter elles-mêmes une porosité ouverte. La porosité ouverte s'étend avantageusement sur tout le volume des pièces constituant le milieu actif, ou au moins sur une certaine épaisseur à proximité de leur surface. Avantageusement, l'ensemble du volume des pièces comporte un réseau tridimensionnel de macropores interconnectés permettant à l'air de circuler au travers des pièces, ce qui renforce l'effet filtrant. Alternativement ou en plus, ladite surface de pièces de milieu actif peut présenter une rugosité de surface propice à la rétention des poussières.

La structure poreuse des pièces et leur chimie de surface peuvent utilement être sélectionnées pour apporter un bénéfice technique particulier, par exemple pour l'adsorption de gaz polluants. A titre d'exemple, la présence d'une micro- et mésoporosité ouverte est particulièrement propice pour l'adsorption de gaz polluants, alors qu'une macroporosité ouverte peut favoriser la captation des particules de taille correspondante, et une porosité alvéolaire ouverte permet de capter les particules les plus grosses (par exemple d'une dimension de l'ordre de 0,1 µm à 10 µm). Ces dernières seront aussi captées par une surface rugueuse, mais avec une capacité volumique d'adsorption plus limitée car l'épaisseur (ou le volume, ce qui est équivalent) accessible du milieu actif sera plus faible.

De manière surprenante, les inventeurs ont constaté que le piégeage de particules présentes dans l'air ambiant, notamment à proximité de voies routières ou ferroviaires, est plus efficace si le ledit milieu actif est constitué de, ou comporte, un matériau présentant un volume poreux supérieur à 0,1 cc/g, de préférence supérieur à 0,2 cc/g, et encore plus préférentiellement supérieur à 0,3 cc/g, pour les pores d'un diamètre compris entre 5 nm et 500 nm. En effet, la seule porosité de diamètre supérieure à 500 nm n'assure pas la captation efficace de particules, surtout de particules fines, mais elle peut permettre un accès aisé de ces particules aux pores de taille inférieure à susceptibles de les retenir. Ledit milieu actif est avantageusement sélectionné dans le groupe formé par : l'alumine, le carbure de silicium (notamment de structure béta), la silice, le carbone, la zircone, les aluminosilicates, les ciments ou leur combinaison. On préfère le carbone, l'alumine et le carbure de silicium béta.

Le milieu actif peut être constitué d'un seul matériau, ou de plusieurs matériaux différents, ou de pièces de même nature chimique mais de porosité interne différente. Les pièces individuelles peuvent être en un seul matériau ou en plusieurs matériaux. Si le milieu actif comporte des pièces en deux ou plusieurs matériaux différents, leur répartition au sein du récipient peut être aléatoire ou non. Dans une variante de l'invention on dispose dans le récipient des pièces en deux ou plusieurs milieux actifs différents, dont un premier présente une densité plus grande que le deuxième ; dans ce cas le milieu actif plus dense peut avoir la fonction principale d'amortisseur acoustique, tandis que le milieu actif moins dense peut avoir la fonction principale de piège à particules et/ou à polluants gazeux.

L'élément de construction selon l'invention présente un espace d'air (espace vide) entre la face de la paroi dirigée vers la source de bruit et ledit milieu actif.

Ainsi ladite face concave est apte à réfléchir le bruit vers ledit milieu actif. Dans un mode de réalisation, la face de la paroi dirigée vers la source de bruit présente une forme galbée concave, la face concave étant dirigée vers la source de bruit. Cela permet de focaliser les ondes acoustiques réfléchies vers ledit milieu à porosité ouverte. Par exemple, ledit récipient peut présenter une forme de panier avec une face concave, ladite face concave étant de préférence dirigée vers ladite paroi.

Ladite paroi renforce également l'effet filtrant du milieu actif : l'air passé à travers le milieu actif est réfléchi ensuite sur ladite paroi située derrière le milieu actif et peut ainsi de nouveau repasser à travers le milieu actif, assurant ainsi un maximum de contact filtrant.

Dans un mode de réalisation ledit récipient comporte au moins une paroi ou une grille perméable à l'air, apte à retenir ledit milieu actif. A titre d'exemple, ledit récipient peut comporter une double paroi remplie du milieu actif, ladite double paroi étant au moins sur une partie de sa surface (et avantageusement sur au moins 50 % de sa surface) perméable à l'air. De même, le fond peut être un double fond rempli du milieu actif et présenter au moins sur une partie de sa surface une perméabilité à l'air, ou une de ses faces peut être ouverte ou ajourée pour permettre à l'air d'accéder aux cavités du milieu actif. Le récipient peut être aussi réalisé entièrement avec une grille permettant une accessibilité du milieu actif par les flux d'air de tous les côtés.

Ledit support rigide de l'élément de construction selon l'invention peut être réalisé en béton.

Ledit élément de construction peut avoir n'importe quelle forme, mais présente de préférence une forme allongée selon un axe long. Il peut se présenter sous la forme d'un élément de structures en béton ou d'un élément de parement.

Un tel dispositif ou élément de construction représente un premier objet de l'invention ; cet objet est représenté en particulier par un élément de construction, notamment pour milieu urbain routier, destiné à purifier l'air et à amortir le bruit émis par une source de bruit à proximité de voies de circulation routière ou ferroviaire, caractérisé en ce que ledit élément de construction comprend une paroi définissant une face destinée à être tournée vers ladite source de bruit et une face destinée à être opposée à ladite source de bruit; au moins un récipient comprenant un milieu actif accessible à l'air ambiant et comprenant un milieu filtrant, ledit milieu actif présentant avantageusement des cavités accessibles à l'air ambiant, ledit au moins un récipient étant disposé du côté de la face de ladite paroi tournée vers ladite source de bruit.

Un autre objet de l'invention est un système de protection contre le bruit et de purification de l'air, notamment pour milieu urbain routier, souterrains ou tunnel routier, ou bâtiment aménagé pour le stationnement de véhicules à moteur, ledit système étant destiné à purifier l'air et à amortir le bruit émis par une source de bruit à proximité de voies de circulation routière ou ferroviaire, et ledit système étant caractérisé en ce qu'il comprend au moins un dispositif ou élément de construction selon l'invention. Dans ce système ledit élément de construction est disposé de manière à ce que la face destinée à être dirigée vers ladite source de bruit soit dirigée vers ladite source de bruit, et la face destinée à être dirigée dans une direction opposée à ladite source de bruit soit dirigée dans une direction opposée à ladite source de bruit.

Comme mentionné ci-dessus, ledit élément de construction présente une forme allongée selon un axe long ; il peut alors être disposé dans un sens sensiblement parallèle à l'axe de ladite voie de circulation routière ou ferroviaire. Il peut par exemple être intégré dans un mur antibruit, ou il peut garnir un mur antibruit. Il n'est pas nécessaire que l'élément de construction s'étende sur la partie supérieure dudit mur antibruit, mais par exemple uniquement jusqu'à une hauteur d'environ 1,5 m et de préférence autour de 1,0 m.

Dans un autre mode de réalisation l'élément de construction selon l'invention est intégré dans la bordure de la route, proche du caniveau d'évacuation ; dans ce cas il peut atténuer une partie du bruit généré par le roulement des roues et une partie des poussières et polluants gazeux générés au niveau des roues, tels que les poussières générées par l'abrasion des pneumatiques, les revêtements de la route et les freins, et les gaz d'échappement.

Dans encore un autre mode de réalisation l'axe dudit élément de construction s'étend selon une direction sensiblement verticale ; l'élément de construction peut ainsi être intégré dans un poteau.

D'une manière générale le captage des poussières tire profit du passage d'air au sein du milieu actif. Ce passage d'air est facilité par le fait que ledit milieu actif présente des cavités, et comprend de manière avantageuse des pièces isolées et présente un certain taux de vide entre ces pièces, comme cela a été expliqué ci-dessus. Le milieu actif peut être aussi constitué par une structure monolithique contenant des cavités ou alvéoles interconnectées entre elles pour former une structure poreuse. Avantageusement la porosité ouverte comprend des macropores qui donnent un accès aisé aux pores de taille plus fine. Le vent et les courants d'air et turbulences générés dans le dispositif lors du passage d'un véhicule peuvent suffire à obtenir un effet de purification de l'air.

Cependant, cet effet peut être renforcé par l'adjonction d'un système d'aspiration forcé de l'air capable d'aspirer l'air à travers ledit milieu actif.

Un autre objet de l'invention est un récipient perméable à l'air et contenant un milieu actif présentant des cavités et comportant un milieu filtrant, comme décrit ci-dessus. Il présente avantageusement une forme allongée avec une section transversale perpendiculaire au sens long en U. Au moins une partie de ses parois est perméable à l'air ambiant ; il peut être réalisé en tôle perforée ou en grille métallique, par exemple. Il peut être réalisé à double paroi, les pièces ou morceaux de milieu actif étant disposées entre les deux parois. Il peut être aussi conçu de manière à offrir une accessibilité aux flux d'air de tous les côtés afin de faciliter la purification de l'air ambiant.

Encore un autre objet de l'invention est l'utilisation d'un matériau présentant un volume poreux supérieur à 0,1 cc/g, de préférence supérieur à 0,2 cc/g, et encore plus préférentiellement supérieur à 0,3 cc/g, pour les pores d'un diamètre compris entre 5 nm et 500 nm, comme milieu filtrant dans un dispositif de purification de l'air ambiant, notamment à proximité de voies de circulation routière ou ferroviaire. Ledit matériau peut être sélectionné notamment dans le groupe formé par : l'alumine, le carbure de silicium (notamment de structure béta), la silice, le carbone, la zircone, les aluminosilicates, les ciments ou leur combinaison. Il peut se présenter avantageusement sous la forme de pièces ou morceaux ou granules présentant une plus grande dimension extérieure comprise entre 0,2 cm et 5,0 cm, préférentiellement comprise entre 0,3 cm et 4,0 cm, plus préférentiellement entre 0,4 cm et 3,0 cm, et encore plus préférentiellement entre 0,5 cm et 2,0 cm .

Dans un mode de réalisation avantageux, lesdites pièces ou morceaux ou granules de milieu actif forment un empilement avec un taux de vide compris entre 26 % et 75 %, préférentiellement compris entre 35 % et 75 %, encore plus préférentiellement entre 45 % et 75 %, et de manière encore plus préférée entre 55 % et 75 %. Ledit empilement est avantageusement enfermé dans un récipient comportant au moins une paroi ou grille perméable à l'air, apte à retenir lesdites pièces ou morceaux de milieu actif.

Un dernier objet de l'invention est un dispositif de purification de l'air ambiant, caractérisé en ce qu'il comprend un milieu filtrant comportant un matériau, ou constitué d'un matériau, présentant une porosité supérieure à 0,1 cc/g, de préférence supérieure à 0,2 cc/g, et encore plus préférentiellement supérieur à 0,3 cc/g, pour les pores d'un diamètre compris entre 5 nm et 500 nm. Ledit matériau peut être sélectionné dans le groupe formé par : l'alumine, le carbure de silicium (notamment de structure béta), la silice, le carbone, la zircone, les aluminosilicates, les ciments ou leur combinaison. Il peut se présenter avantageusement sous la forme de pièces ou morceaux ou granules présentant une plus grande dimension extérieure comprise entre 0,2 cm et 5,0 cm, préférentiellement comprise entre 0,3 cm et 4,0 cm, plus préférentiellement entre 0,4 cm et 3,0 cm, et encore plus préférentiellement entre 0,5 cm et 2,0 cm.

Dans un mode de réalisation avantageux, lesdites pièces ou morceaux ou granules de milieu actif forment un empilement avec un taux de vide compris entre 26 % et 75 %, préférentiellement compris entre 35 % et 75 %, encore plus préférentiellement entre 45 % et 75 %, et de manière encore plus préférée entre 55 % et 75 %. Ledit empilement est avantageusement enfermé dans un récipient comportant au moins une paroi ou grille perméable à l'air, apte à retenir lesdites pièces ou morceaux de milieu actif.

Dans un mode de réalisation avantageux, ledit dispositif de purification de l'air ambiant est dépourvu de moyens mécaniques pour générer un flux d'air passant par ledit milieu filtrant. Il peut dépendre entièrement du flux naturel de l'air. Il peut être intégré dans un élément de construction, notamment pour milieu urbain routier, destiné à purifier l'air et à amortir le bruit émis par une source de bruit à proximité de voies de circulation routière ou ferroviaire, selon la présente invention, comme décrit ci-dessus.

Encore un autre objet de l'invention est un procédé de régénération du milieu actif dans un élément de construction selon l'invention, ou dans un système de protection contre le bruit et de purification de l'air selon l'invention, ou dans un récipient perméable à l'air et contenant un milieu actif présentant des cavités et comportant un milieu filtrant selon l'invention, ou dans un dispositif de purification de l'air ambiant selon l'invention, dans lequel on asperge ledit milieu actif par un jet d'eau sous pression, ladite pression étant de préférence supérieure à 1 bar. Cette facilité de nettoyage est un avantage très significatif des objets de la présente invention. Un simple jet d'eau sous pression peut suffire, tel qu'il est disponible dans des véhicules de nettoyage urbain.

### Figures

Les figures illustrent certains aspects ou modes de réalisation particuliers de l'invention. Elles ne limitent pas sa portée juridique.
Les figures 1 et 2 montrent des vues schématiques d'un dispositif selon un premier mode de réalisation de l'invention, installé dans la partie inférieure d'un mur anti-bruit parallèle à une route.
La figure 3 montre deux photographies de pièces d'élément actif, qui se présente en l'occurrence sous la forme d'anneaux, utilisable dans le cadre de la présente invention.
La figure 4 montre de manière schématique deux procédés de régénération des éléments actifs utilisés pour réaliser l'invention.
La figure 5 montre deux photographies d'un récipient creux comportant des parois perméables à l'air, utilisable avec l'élément de construction selon l'invention. La figure 5(a) le montre vide, la figure 5(b) le montre rempli de pièces d'élément actif d'une forme similaire à celle des pièces d'élément actif montrées sur la figure 3.
La figure 6A montre la photographie d'un système filtrant constitué par un empilement d'anneaux de milieu actif avec un système d'aspiration tubulaire. Le système est constitué de deux parties filtrantes disposées chacune en amont d'un filtre papier absolu et d'une aspiration indépendante (dans les tests un est rempli avec les anneaux de SiC tandis que l'autre est vide et joue le rôle de réservoir à blanc).
La figure 6B montre une photographie de la dispersion de particules qui étaient piégées dans le filtre, et qui en ont été extraites en traitant le filtre sous ultrason pendant 30 minutes dans un mélange à 80% d'eau et 20% d'éthanol.
Les figures 6C et 6D montrent des images de microscopie optique du filtre avant le piégeage des particules, tandis que les figures 6E et 6F montrent des images correspondantes du filtre après piégeage des particules. Les figures 6G et 6H montrent des images de microscopie optique des particules récupérées dans le milieu liquide après le traitement du filtre sous ultrasons. Elles permettent d'apprécier la distribution de taille des particules qui ont été piégées par le filtre.
La figure 7A montre un flacon de sédimentation avec la phase liquide de lavage récupérée après le traitement aux ultrasons d'un milieu actif selon l'invention exposé à l'air urbain pollué.
Les figures 7B à 7E montrent des images de microscopie électronique à balayage des résidus récupérés par ultrasons sur le filtre après 10 h de fonctionnement ou 4 500 m³ d'air filtré. Les figures 7B et 7D montrent les particules se trouvant dans le surnageant de la solution récupérée après le traitement ultrasons. Les figures 7C et 7E montrent les particules qui se trouvent dans le sédiment de la solution récupérée après le traitement ultrasons.
La figure 8 montre des micrographies électroniques à balayage (MEB) de la surface d'un milieu actif (anneaux à base de SiC) après trois semaines de piégeage passif sur une terrasse proche d'un carrefour routier à une hauteur de 10 m par rapport au sol.
   (A-C) : Surface d'un anneau représentatif avant piégeage.
   (D-F) : Surface d'un anneau représentatif après piégeage.
   (G-I) : Surface d'un anneau représentatif après lavage sous jet d'eau.
La figure 9 montre une vue en perspective d'un récipient en forme de U vide, destiné à contenir les morceaux de milieu actif. On note que ses parois sont perméables à l'air.
La figure 10 montre de manière schématique une section transversale d'un élément de construction selon un autre mode de réalisation de l'invention, comprenant une structure en forme de « U » dense (typiquement en béton) pour amortir le bruit qui se trouve à l'intérieur d'un panier métallique perméable à l'air en forme de « U », et un garnissage de pièces ou morceaux de milieu actif capables d'agir comme filtre à particules.
La figure 11 se rapporte à l'exemple 6 et montre la distribution poreuse (déterminée par la technique d'intrusion de mercure) de trois échantillons de milieu actifs.

Les repères numériques suivants sont utilisés sur les figures et dans la description :

| | | | |
|---|---|---|---|
| 1 | Elément de construction | 17 | Membrure inférieure |
| 2 | Paroi | 18 | Espace d'amortissement |
| 3 | Face dirigée vers la source de bruit | 19 | Face latérale du trottoir |
| 4 | Face dirigée dans direction opposée de 3 | 20 | Face creuse du récipient 5 |
| 5 | Récipient comportant un milieu actif | 21 | Paroi du récipient 5 |
| 6 | Milieu actif | 22 | Pièces ou morceaux de milieu actif |
| 7 | Zone de turbulences | 23 | Base du récipient 5 |
| 8 | Surface structurée | 24 | Cavité dans et/ou entre morceaux 22 |
| 9 | Espace (gap) d'air | 25 | Elément de structure vertical |
| 10 | Véhicule terrestre (source de bruit) | 26 | Bras du récipient 5 en « U » |
| 11 | Roue du véhicule | 30 | Caniveau de récupération (eau polluée) |
| 12 | Route (chaussée) | 31 | Portion verticale |
| 13 | Trottoir | 32 | Portion horizontale |
| 14 | Elément vertical de fixation | 33 | Portion inclinée |
| 15 | Elément de bordure | 34 | Ressaut d'arrêt des eaux pluviales |
| 16 | Membrure supérieure | 40 | Insert dense |

### Description

### 1) Définitions et méthodes de caractérisation

Dans le cadre de la présente invention on se réfère, pour caractériser les matériaux qui constituent le milieu actif, et en particulier le milieu filtrant, à des concepts visant à décrire leur morphologie interne, qui comporte des pores de différentes classes de diamètre.

Ainsi, la porosité d'un matériau est habituellement définie par référence à trois catégories de pores qui se distinguent par leur taille moyenne : les micropores (diamètre inférieur à 2 nm), les mésopores (diamètre compris entre 2 nm et 50 nm) et les macropores (diamètre supérieur à environ 50 nm). Ces définitions des termes « mésopore » et « micropore » proviennent des publications de l'International Union for Pure and Applied Chemistry (IUPAC), dont les travaux de terminologie font foi dans le domaine de la chimie. Ces références bibliographiques sont notamment l'article publié par IUPAC dans Pure & Applied Chemistry, 66, n° 8, p. 1739-1758, et aussi de manière plus générale le IUPAC « Compendium of Chemical Terminology » (appelé « Gold Book »), version 2.3.2 (19 août 2012) ; voir aussi l'article « Texture des matériaux pulvérulents ou poreux » par F. Rouquerol et al., paru dans la collection Techniques de l'Ingénieur, traité Analyse et Caractérisation, chapitre P 1050).

La technique de caractérisation préférée pour mesurer la distribution de la taille de pores (et en particulier des pores qui contribuent à cette mésoporosité) et pour déterminer le volume mésoporeux est la mesure de la pénétration du mercure (appelée aussi « porosimétrie par intrusion de mercure »).

### 2) Description détaillée de l'invention

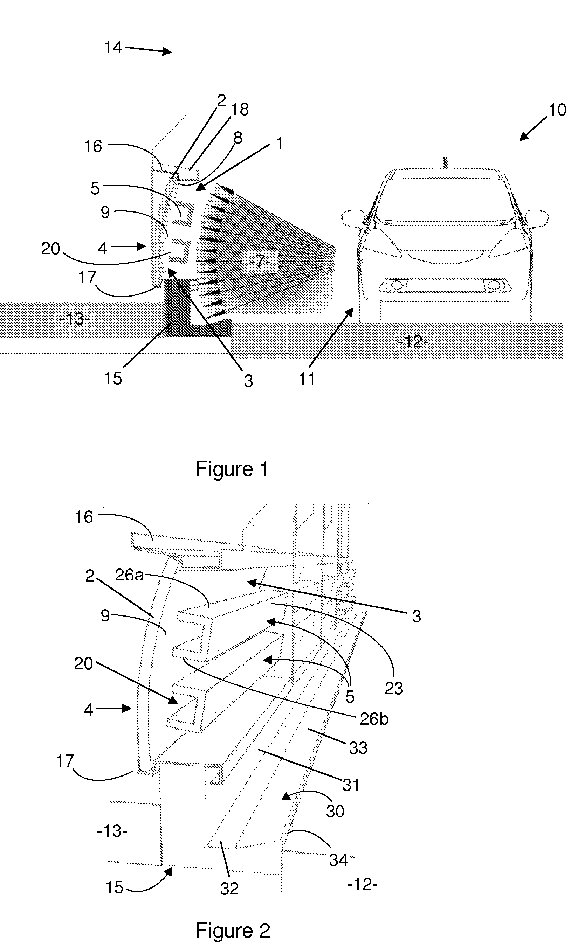

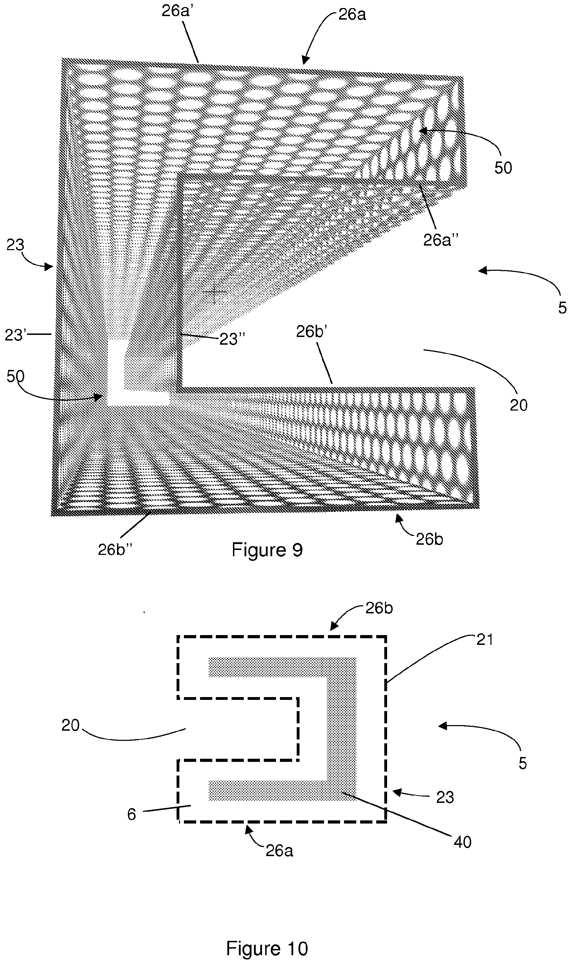

La figure 1 montre un dispositif dit élément de construction **1** selon l'invention. Il comprend une paroi **2** définissant une première face **3** dirigée vers la source de bruit **10** et une seconde face **4** dirigée dans une direction opposée à la source de bruit **10.** Il comprend par ailleurs des récipients **5** comportant un milieu actif **6** (visible sur la figure 10).

Le dispositif **1** selon l'invention remplit au moins deux fonctions. Une première fonction est celle d'un filtre à particules. Le dispositif **1** possède des éléments actifs appelés ici « filtre à particules » ou « piège à particules » comportant un milieu actif **6** sélectionné de manière à être capable d'agir comme filtre à particules. Ce milieu actif **6** présente avantageusement une porosité ouverte capable de piéger des particules solides en suspension dans l'air. Cette fonction exploite l'effet du vent et surtout le courant d'air et les turbulences qui sont créés dans une zone de turbulences **7** par le passage de véhicules **10,** et dans une zone de turbulence créée dans le gap d'air **9** par réflexion des flux d'air sur la paroi **2,** et qui renforcent le passage d'air à travers le dispositif.

Une deuxième fonction est celle d'un amortisseur de bruit. A cette fin, le dispositif **1** présente une paroi **2** agissant comme écran réfléchissant les ondes acoustiques provenant d'une source de bruit, en l'occurrence d'un véhicule qui passe. Ladite paroi **2** renvoie les ondes acoustiques vers une pluralité d'éléments actifs agissant comme amortisseur acoustique, appelé ici aussi « piège acoustique ». Ainsi, le dispositif **1** selon l'invention combine deux mécanismes de lutte contre le bruit connus en tant que tels : celui d'un mur réfléchissant (qui protège l'espace derrière le mur, mais diffuse le bruit vers l'avant et créé un bruit de fond) et celui d'un mur absorbant.

Le dispositif **1** selon l'invention permet de diminuer à la fois le taux de particules dans l'air et le niveau de bruit généré par le véhicule terrestre. En effet, en matière de circulation routière et ferroviaire, le lieu de génération du bruit n'est pas très éloigné du lieu de génération des particules: il se situe en général au niveau des roues **11.** Une grande partie du bruit émanant d'un véhicule terrestre **10** est générée au contact entre les roues **11** et la route **12** ou le rail, où sont générées aussi une grande partie des particules (par l'abrasion des pneumatiques sur la route et par l'abrasion des revêtements routiers, dans le cas des véhicules routiers, par l'abrasion des garnitures de frein sur le disque de frein, et par tourbillonnement des poussières déposées sur la route **12**), et où se trouve la sortie du pot d'échappement. Le moteur des véhicules **10** de tourisme, une autre source de bruit, se trouve à un niveau au-dessus des roues **11** alors que le bruit généré par la pénétration du véhicule **10** dans l'air qui engendre des turbulences est plus difficile à localiser.

Au sens de la présente invention, le terme « élément actif » désigne un élément qui exerce directement au moins une des fonctions techniques souhaitées pour le dispositif **1** ; cette fonction technique peut être liée à un effet technique qui découle directement de certaines caractéristiques intrinsèques dudit élément actif, par exemple des propriétés physico-chimiques des matériaux qui le constituent ou qu'il comporte.

Selon une caractéristique essentielle de l'invention permettant de résoudre à la fois le problème de la purification de l'air et de la lutte contre le bruit, le dispositif **1** comprend des éléments actifs qui agissent à la fois comme piège à particules et comme piège acoustique (appelés ici aussi « amortisseurs acoustiques »). Ces éléments actifs doivent être constitués d'un milieu actif, ou doivent comprendre un tel milieu actif.

Selon l'invention ledit élément de construction **1** comprend un support rigide **2** formant paroi, avec une surface de réflexion (appelée ici aussi « surface acoustique ») aménagée dans la face **3** destinée à être dirigée vers la source de bruit, ou représentée par ladite face **3.** Tout type de matériau habituellement employé par l'homme du métier dans les parements en milieu urbain et routier peut être utilisé pour réaliser ce support rigide **2.**

De manière préférée la surface acoustique présente une forme qui peut réfléchir une partie du spectre sonore. Cette forme peut aussi, et en même temps, être choisie pour répondre à des critères esthétiques. Cette forme peut être aussi être choisie pour absorber une partie du spectre acoustique, et à ce titre la surface acoustique peut être une surface structurée **8** présentant par exemple des zones hautes et des zones basses (par rapport à la surface acoustique). Ladite surface structurée **8** peut par exemple être cannelée ou présenter une forme fractale, ou une forme présentant des trous, borgnes ou traversant, d'un diamètre typiquement compris entre un centimètre et un ou deux décimètres. La profondeur des zones basses par rapport aux zones hautes peut atteindre un ou même deux décimètres.

Entre ladite surface acoustique **3** et la surface dudit piège acoustique se trouve un espace d'air **9** (gap d'air) qui présente typiquement une épaisseur comprise entre environ un centimètre et environ trois décimètres, de manière préférée entre 2 cm et 25 cm, de manière encore plus préférée entre 4 cm et 20 cm, et de manière optimale entre 8 cm et 12 cm.

Ladite surface acoustique est apte à réfléchir les ondes acoustiques sur au moins une partie du spectre acoustique audible (même si dans le mode de réalisation présenté ci-dessus elle peut aussi en absorber une partie). La surface acoustique est de préférence de forme globalement galbée avec une courbure concave, permettant de concentrer les ondes acoustiques réfléchies vers ledit piège acoustique. Un tel mode de réalisation préféré est montré sur la figure 1.

Ladite surface acoustique permet également de renvoyer le flux d'air vers la face arrière du panier contenant le milieu actif permettant ainsi d'améliorer l'efficacité du piégeage des particules.

Comme cela est montré sur la figure 1 l'élément de construction **1** selon l'invention peut avoir la forme globale d'un parement ou d'un écran, par exemple. Il peut être utilisé comme élément séparateur entre la route **12** et le trottoir **13.** Il peut être fixé sur des éléments verticaux de fixation **14** de manière à s'étendre horizontalement entre deux éléments verticaux de fixation **14** voisins. Alternativement ou en plus, il peut être fixé sur un élément de bordure **15** qui peut intégrer le caniveau. La paroi **2** et/ou la surface acoustique peuvent être en béton, par exemple en béton armé de fibres, métalliques et/ou non-métalliques. Son épaisseur peut par exemple être comprise entre 6 cm et 8 cm.

La figure 2 montre de manière plus détaillée et simplifiée l'élément de construction **1** représenté sur la figure 1. Il est fixé sur l'élément vertical de fixation **14** par l'intermédiaire d'une membrure supérieure **16,** et sur l'élément horizontal de bordure **15** par l'intermédiaire d'une membrure inférieure **17** ; ces deux membrures **16, 17** peuvent être des profilés en tôle métallique. Un espace d'amortissement **18** (visible sur la figure 1) est prévu entre la membrure supérieure **16** et l'élément vertical de fixation **14.**

Comme cela ressort des figures 1 et 2, la hauteur de l'élément vertical de fixation **14** (qui correspond sur la figure 1 à environ deux fois la hauteur d'un homme) est supérieure à celle de l'élément de construction **1** selon l'invention ; au-dessus de ce dernier peut s'étendre horizontalement un élément de construction anti-bruit de type connu (non montré sur les figures). Ainsi l'élément de construction **1** selon l'invention peut former la partie inférieure d'un mur anti-bruit de hauteur voulue. Dans ce mode de réalisation la hauteur de l'élément de construction selon l'invention ne dépasse pas 1,6 mètres, et de préférence ne dépasse pas 1,4 mètres.

Nous décrivons maintenant les éléments actifs. Ils comportent le milieu actif et peuvent servir (à la fois ou séparément) comme éléments amortisseurs acoustiques et comme pièges à particules. Le milieu actif **6** est contenu dans des récipients **5.** Selon une caractéristique essentielle de l'invention ledit milieu actif **6** est au moins partiellement en contact avec l'air ambiant. Dans ce but, lesdits récipients **5** sont avantageusement perméables à l'air, ou ils présentent une face au moins partiellement ouverte ou ajourée, afin que l'air ambiant puisse accéder au milieu actif. Ils peuvent prendre la forme de paniers. L'espace intérieur ainsi créé est rempli de pièces ou morceaux de milieu actif. Il peut être aussi sous forme d'une monolithe contenant des cavités connectées entre elles pour former une structure creuse ou sous forme d'une mousse alvéolaire.

Le récipient **5** présente une face creuse **20** ; cette face creuse **20** est dirigée vers la surface **3** dudit écran acoustique, en d'autres termes tournée vers celle-ci, comme montré sur les figures 1 et 2. Le récipient **5** peut comprendre une cheminée qui a pour effet de faciliter l'accès de l'air au milieu actif **6,** d'accélérer l'air par un effet Venturi, et de contribuer à l'amortissement acoustique.

Selon un autre mode de réalisation, qui peut être combiné avec le premier, les parois des récipients **5** sont réalisées en maille métallique. Le récipient peut être fermé par un moyen de fermeture perméable à l'air, tel qu'une grille (non montrée sur les figures). Le fond peut lui aussi être réalisé en grille perméable à l'air. Dans une variante, les parois des récipients 5 sont en matériau plastique (polymère) ; cela rend le récipient plus léger.

Selon un autre mode de réalisation illustré sur la figure 9, le panier **5** est réalisé en acier (de préférence inoxydable), à partir d'une tôle perforée ou métal déployé, pliée, ou d'un grillage fixé sur une armature, avec une section en forme de U. Dans cette géométrie en U la face creuse **20** est particulièrement profonde. Comme cela est montré sur la figure 9 (et aussi sur la figure 10), les bras **26a, 26b** et la base **23** du récipient en « U » sont chacun à double paroi (**26a', 26a", 26b', 26b", 23', 23"**) et peuvent accueillir le milieu actif. Le vide intérieur du U, dont les dimensions peuvent varier typiquement de 8 cm X 8 cm à 16 cm X 16 cm a une fonction de frein pour l'air. On note que le ralentissement de la masse d'air a le double effet de faciliter le dépôt des particules sur le milieu actif et de réduire le bruit.

Dans un mode de réalisation les paniers en forme de U sont inscriptibles dans un carré de 25 cm X 25 cm environ et la paroi a une épaisseur de 4 cm à 8 cm.

D'une manière générale, la paroi de ces paniers ou bacs représente un espace creux à double paroi réalisée en tôle perforée ou grillage ; cet espace creux entre les deux parois formant la double paroi peut être rempli de pièces ou morceaux de milieu actif.

A titre d'exemple, la section du panier peut avoir une superficie pouvant aller de 250 cm² à 350 cm², soit une trentaine de litres environ au mètre linéaire. Le panier peut être conçu, en termes de résistance des matériaux, comme une poutre simple reposant sur ses extrémités. Ainsi les récipients 5 peuvent être posés sur des crochets fixés (par soudage ou d'autres moyens connus) sur les éléments verticaux de fixation **14.** Ils sont conçus pour être facilement amovibles pour pouvoir être lavés en atelier ou traités thermiquement. La longueur des paniers peut être de l'ordre de 2,50 m à 3,00 m, en fonction des produits métallurgiques qui seront retenus : tôle perforée, métal déployé ou grillage sur armature. Dans tous les cas, il est avantageux qu'ils soient autoportants.

Dans une variante, les paniers sont conçus de manière à permettre l'ouverture par le bas et/ou par le haut, de manière à ce que le milieu actif puisse être récupéré par décharge par le bas (notamment par gravité) et/ou par prélèvement par le haut, par tous moyens connus, par exemple par aspiration.

Selon un autre mode de réalisation deux ou plusieurs récipients sont montés dans une boîte ouverte. Ce dispositif consiste alors en l'association d'une boite enfermant une masse d'air en circulation continue et d'un système de piégeage des particules et de réduction du bruit. La géométrie de l'ensemble est conçue pour que tous les mouvements d'air soient amenés à toucher la surface des paniers. Ladite boite peut être constituée par un encadrement en tôle d'acier de 0,5 à 6 mm d'épaisseur et un fond en béton de fibre de 6 à 8 cm d'épaisseur, ce dernier présentant une forte inertie, en réponse au besoin de réduction du bruit. Ladite boîte peut par exemple présenter une longueur d'environ 3 m, une hauteur d'environ 1 m, une profondeur moyenne d'environ 0,40 m, et un volume d'environ 1,2 m³ ; elle peut contenir deux paniers comme ceux que l'on vient de décrire ci-dessus, en respectant des distances de l'ordre de 8 cm à 20 cm entre les paniers, afin de couvrir le spectre des fréquences de la masse d'air sous pression enfermée dans la boîte.

Dans un mode de réalisation avantageux pour la fonction amortissement du bruit, les récipients **5** doivent avoir une masse suffisante ; on peut utiliser par exemple une tôle d'environ 2 mm à 3 mm d'épaisseur. Le récipient **5** peut aussi être en béton, éventuellement armé, et avantageusement fermé par une grille perméable à l'air ; les parois en béton peuvent présenter une pluralité d'orifices pour permettre à l'air d'accéder au milieu actif.

La figure 10 montre un mode de réalisation particulier d'un élément de construction **1** selon l'invention avec un récipient **5** (panier) en forme de « U », réalisé par exemple en grille métallique ou en tôle perforée (comme montré sur la figure 9) et comprenant un insert **40** dense (par exemple en béton). Cet insert **40** présente dans l'exemple avantageux de la figure 10 la forme d'une poutre présentant une section en « U », mais pourrait être une simple plaque en béton parallèle au fond (base) du récipient **5.** Cet insert **40** est noyé dans un garnissage de milieu actif **6** ; l'espace entre l'insert **40** et la paroi **21** du récipient **5** contient les pièces ou morceaux de milieu actif **6.** Cette configuration maximise l'efficacité d'amortissement du bruit tout en gardant la totalité de la surface géométrique du panier **5** disponible pour la captation de particules par le milieu actif **6.**

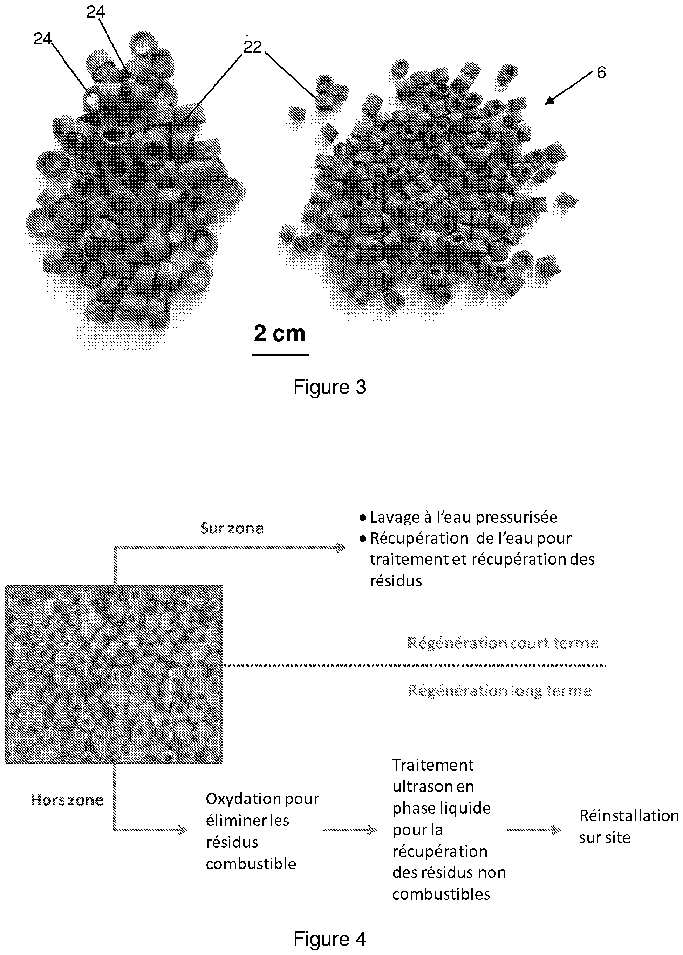

D'une manière générale le milieu actif **6** peut se présenter sous la forme de pièces ou morceaux **22** de formes diverses, et notamment creuses et/ou irrégulières. La figure 3 montre des pièces ou morceaux **22** creux de milieu actif sous la forme d'anneaux dont la plus grande dimension est dans cet exemple de l'ordre du centimètre. Le fait que le milieu actif se présente sous la forme de pièces ou morceaux est important car cela facilite d'une part l'accès de l'air ambiant au milieu actif, et d'autre part renforce l'effet d'amortisseur acoustique : le milieu actif présente ainsi des cavités **24** de dimensions très variables qui sont de l'ordre de grandeur de la longueur d'onde des fréquences acoustiques de la partie haute fréquence du domaine audible. Pour cette raison on préfère que les pièces ou morceaux soient creux et/ou de forme irrégulière, car cela facilite la formation de cavités de dimensions variables qui améliorent le contact avec l'air pollué et l'adsorption des particules fines présentes dans cet air. On peut également utiliser des paniers avec des pièces ou morceaux de tailles et/ou formes différentes. L'utilisation de pièces ou morceaux de forme creuse, ouverte sur la surface d'enveloppe de la pièce permet aussi de générer des cavités **24** qui facilitent l'accès de l'air ambiant au milieu actif. Il peut être aussi sous forme d'un monolithe contenant des cavités connectées entre elles pour former une structure creuse ou sous forme d'une mousse alvéolaire.

Sans vouloir être liés par cette théorie qui explique leurs observations, les inventeurs pensent que les cavités avec les dimensions variables permettent de créer des mouvements de compression - détente de l'air qui peuvent amener à mieux déposer les particules dans ladite cavité. Ces cavités servent aussi à l'amortissement acoustique.

L'effet d'amortisseur acoustique est renforcé par la face creuse du récipient (par exemple l'ouverture de la section en « U ») qui représente avantageusement une cavité de dimensions centimétriques voire décimétriques, une dimension qui correspond à la longueur d'onde de fréquences acoustiques plus faibles (de l'ordre de quelque milliers de Hz). L'effet amortisseur est également renforcé par une disposition des récipients à distance variable par rapport à la paroi acoustique.

L'efficacité dans le piégeage des ondes acoustiques peut être renforcée en utilisant deux structures comprenant des matériaux absorbants de densités différentes, dont la première structure (moins dense, poreuse) est dédiée au captage des particules tandis que la deuxième (plus dense) sert à réduire les ondes acoustiques. Dans ce cas les pièces des deux structures peuvent être mélangées ou disposées en couches superposées, par exemple. Comme indiqué ci-dessus cela peut être réalisé en remplissant le récipient avec des pièces ou morceaux de forme et/ou taille différent, formant une première couche en milieu actif moins dense, et une deuxième couche en milieu actif plus dense.

Selon un mode de réalisation avantageux lesdits récipients présentent une section en « U » avec un diamètre ouvert de l'ordre de 6 cm à 20 cm, préférentiellement entre 8 cm et 18 cm, encore plus préférentiellement entre 10 cm et 16 cm, et de manière optimale entre 12 cm et 14 cm. Avec ces dimensions on obtient une bonne atténuation dans le spectre acoustique compris entre 1 500 Hz et 8 000 Hz.

Lesdits éléments actifs sont disposés à une distance variable (et de préférence plutôt aléatoire) de l'élément de la surface acoustique. Lesdits paniers ont de préférence une forme interne qui est galbée. Ces distances variables entre la surface géométrique des éléments actifs et la surface acoustique renforcent l'effet d'atténuation acoustique dans la zone spectrale audible. En ce qui concerne l'effet acoustique, il est important de noter que l'élément de construction selon l'invention peut être utilisé comme un mur anti-bruit, ou peut être intégré dans un mur anti-bruit, mais se distingue des murs anti-bruit connus par le fait qu'il ne se limite pas à renvoyer les ondes acoustiques dans une direction différente (réflexion acoustique), mais encore absorbe une partie de l'énergie acoustique (atténuation du bruit).

Les inventeurs ont découvert que le dispositif selon l'invention peut remplir une troisième fonction, à savoir une fonction de dépollution de l'air par piégeage de polluants organiques gazeux présents dans l'atmosphère, et surtout de polluants représentés par des molécules assez lourdes qui présentent une température de vaporisation supérieure aux températures ambiantes généralement observées, telles que les hydrocarbures aromatiques polycycliques, les polychlorobiphényles, les phtalates, les pesticides. Le dispositif permet également de capter des polluants légers (NH₃, oxydes de soufre, oxydes d'azote), mais compte tenu de la forte volatilité de ces molécules légères il semble que l'élément actif joue plutôt le rôle de capteur que de piégeur, ou autrement dit, que le piégeage observé n'est pas uniquement dû à l'interaction entre la molécule et le milieu à porosité ouverte qui constitue l'élément actif, mais aussi entre la molécule et des poussières ou de films de molécules organiques déjà piégées.

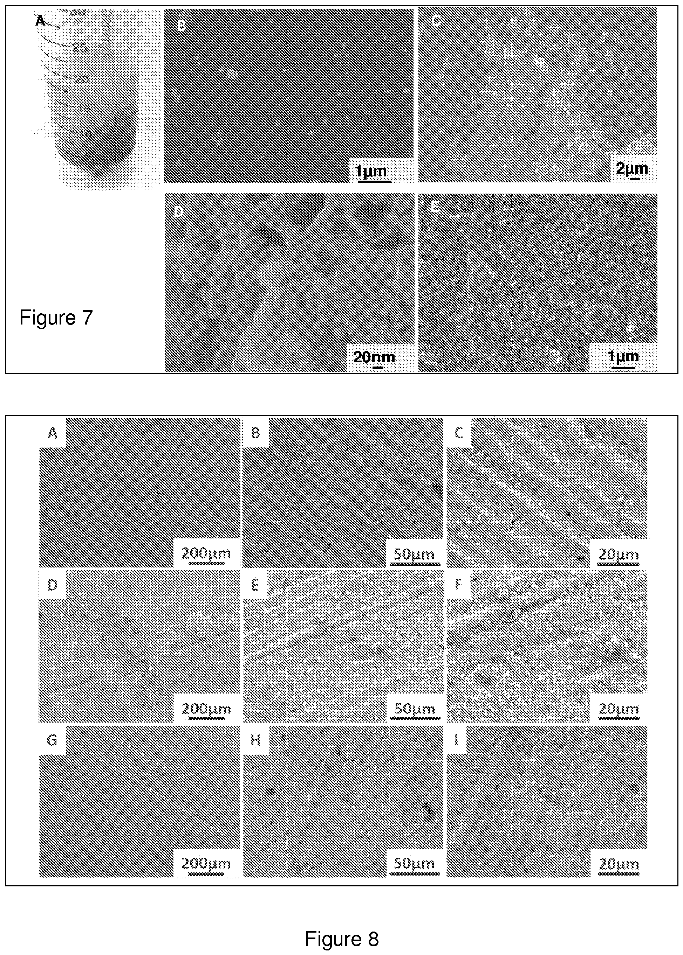

Selon un mode de réalisation avantageux de l'invention, les éléments actifs sont constitués de carbure de silicium (SiC) poreux, ou comportent du SiC poreux. De préférence, il s'agit de pièces en β-SiC poreux. Ces pièces présentent une grande porosité, qui est une porosité ouverte. Le β-SiC poreux présente plusieurs avantages. Il comporte une rugosité de surface ajustable, en particulier dans la gamme désirée entre 50 nm et 20 microns environ, comme illustré par exemple sur la figure 8A à C. Le β-SiC poreux est très robuste sur le plan mécanique, thermique et chimique. Les pièces en β-SiC poreux résistent notamment aux vibrations générées au cours de leur manipulation, leur utilisation et leur lavage au jet d'eau. Le lavage au jet d'eau enlève la plus grande partie des particules solides piégées ; grâce à son inertie par rapport à l'atmosphère et à la chaleur les pièces en β-SiC poreux peuvent être régénérées par calcination pour brûler les particules, les condensats et les gaz piégés qui résistent au lavage au jet d'eau. Le β-SiC poreux peut être préparé avec une porosité ouverte contrôlée, et la forme géométrique des pièces peut être adaptée facilement aux besoins spécifiques lors de leur fabrication.

Les techniques de fabrication de pièces en β-SiC poreux sont connues depuis longtemps et ont été décrites dans de nombreux documents brevets. Le carbure de silicium, et notamment le β-SiC à haute surface spécifique, est connu en tant que support de catalyseur. Le β-SiC peut être obtenu par la réaction entre des vapeurs de SiO avec du carbone réactif à une température comprise entre 1100°C et 1400°C (procédé Ledoux, voir EP 0 313 480 B1), ou par un procédé dans lequel un mélange d'un prépolymère liquide ou pâteux et d'une poudre de silicium est réticulé, carbonisé et ensuite carburé à une température comprise entre 1000°C et 1400°C (procédé Dubots, voir EP 0 440 569 B1 ou EP 0 952 889 B1). On connaît par ailleurs les mousses de β-SiC, qui peuvent être obtenues par une variante du procédé Dubots, comprenant l'imprégnation d'une mousse polyuréthane avec une suspension d'une poudre de silicium dans une résine organique (procédé Prin, voir EP 0 624 560 B1, EP 0 836 882 B1 ou WO/04900).

Le procédé Prin permet la fabrication de mousses alvéolaires qui présentent à la fois des alvéoles ouvertes et une micro- ou mésoporosité ouverte.

Comme milieu actif on peut également utiliser d'autres matériaux poreux, pris seuls ou en combinaison, tels que le carbone, l'alumine, la silice, la zircone, les aluminosilicates ou les ciments. Comme le β-SiC, ces matériaux n'ont en tant que tels pas d'activité photo-catalytique significative. Il est possible de prévoir que le milieu actif comprenne un photo-catalyseur, et à ce titre il est possible par exemple de revêtir au moins partiellement les matériaux indiqués ci-dessus d'un photo-catalyseur, par exemple de dioxyde de titane. Cependant, dans les cas où la géométrie du dispositif selon l'invention n'est pas optimisée pour que les éléments actifs puissent recevoir du rayonnement solaire direct, il n'est pas particulièrement utile que ledit milieu actif comprenne un agent photo-catalytique. D'une manière générale, le dispositif selon l'invention n'utilise pas principalement l'effet photo-catalytique pour dépolluer l'air ambiant, même si cet effet peut apporter une petite contribution à la réduction du taux d'oxydes d'azote.

Le charbon actif n'est pas un matériau préféré dans le cadre de la présente invention, car la plupart des produits, et surtout ceux destinés à l'adsorption de gaz, ont un volume poreux essentiellement microporeux, qui ne permet pas le captage efficace de particules contenues dans l'air ambiant, et/ou qui ne permet pas la régénération facile lorsque de telles particules ont été captées.

Pour que l'effet piège à particules du milieu actif soit durable il est nécessaire de régénérer le milieu actif. Cela peut se faire de deux manières, une dite à court terme, l'autre dite à long terme. La figure 4 décrit de manière schématique ces deux procédés de régénération du milieu actif.

La régénération à court terme du milieu actif peut se faire sous la forme d'un simple lavage à l'eau, par exemple à l'eau, notamment par un jet d'eau pressurisée ou par ruissellement. On peut la faire « sur zone », i.e. sans démonter les récipients. Il est préférable de récupérer cette eau de lavage qui est chargée en particules et autres composés tels que les métaux ou des composés chimiques pour traitement et récupération des particules. Ce lavage peut être effectué par le personnel d'entretien des routes.

La régénération à long terme devient nécessaire notamment pour éliminer les résidus organiques qui n'ont pas été éliminés par le lavage à l'eau sur zone et qui finissent par se déposer sur la surface ouverte des pores du milieu actif. Elle doit être faite « hors zone », après le démontage des récipients. On soumet le milieu actif à un lavage à l'eau comme décrit précédemment puis à un traitement oxydant (éventuellement à une température supérieure à 300 °C) pour éliminer les résidus combustibles (suie, hydrocarbures aromatique, autres matières organiques).

Le milieu actif doit être sélectionné pour pouvoir résister à ces deux traitements de régénération. Plus précisément, il doit présenter à la fois une résistance mécanique suffisante pour survivre au lavage au jet d'eau (le terme résistance mécanique comprend ici la résistance aux chocs et à l'attrition, sachant que les pièces ou morceaux vont bouger et s'entrechoquer lors de ce lavage), et une résistance à l'oxydation à température élevée sans modification de ses propriétés physico-chimiques.

Le matériau doit être robuste afin de résister aux conditions climatiques et aux régénérations successives (intempérie liée au changement de saison, lavage à l'eau (sous jet d'eau pressurisée ou non), régénération thermique ou chimique) et aussi lors des transports. Avantageusement, le matériau constituant le système filtrant devrait présenter une résistance mécanique la plus élevée possible, une grande résistance chimique vis-à-vis des composés corrosifs tels que les acides ou bases, et une dilatation thermique la plus faible possible.

Parmi les matériaux cités ci-dessus le carbure de silicium constitue le matériau le plus avantageux pour être utilisé dans les systèmes filtrants proposés. Le carbure de silicium utilisé peut consister en l'un quelconque des carbures de silicium connus sous réserve qu'il présente les caractéristiques requises de rugosité, d'une mise en forme adaptée aux conditions d'opération (structures ouvertes avec des voies de circulation dans la matrice permettant de réduire au maximum les problèmes de perte de charge tout en offrant une meilleure surface effective de contact avec des effluents à traiter), et de préférence de porosité (réseau de mésopores connectés entre eux par des macropores afin de faciliter la circulation des effluents à traiter). De plus, le carbure de silicium possède une résistance à l'oxydation élevée. La résistance à l'oxydation permet de procéder à des cycles de régénérations oxydantes afin de brûler les particules piégées par le filtre.

Le carbure de silicium peut être mis en œuvre soit sous forme pure (constitué par au moins 95% en poids de carbure de silicium) soit sous forme de composites constitués par un mélange de carbure de silicium et d'autres composés tels que le carbone, le silicium, l'alumine, la silice, les aluminosilicates, les ciments ou tous autres composés résistant à l'oxydation susceptibles d'être intégrés dans la production dudit carbure de silicium.

L'invention peut être réalisée de nombreuses manières différentes.

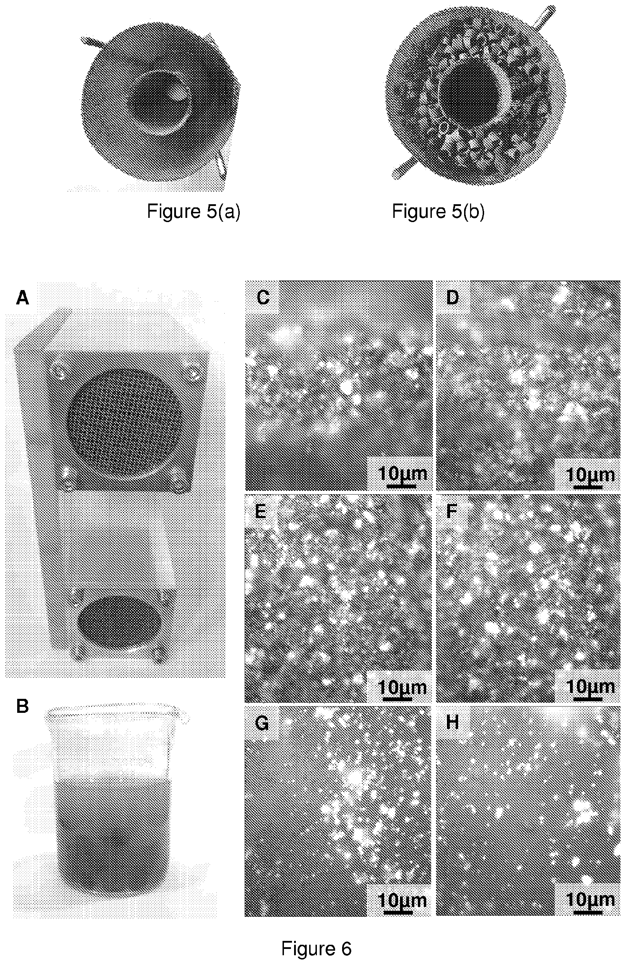

Les récipients peuvent être longitudinaux, comme illustré sur les figures 1 et 2 ; un mode de réalisation concret sera décrit ci-dessous. Ils peuvent aussi être circulaires, comme sur la figure 5(a) qui montre un récipient vide, et sur la figure 5(b) qui montre un récipient rempli.

Le dispositif est conçu et dimensionné pour que tous les mouvements d'air soient amenés à toucher la surface des paniers. Le panier peut être réalisé par un encadrement en tôle d'acier, typiquement d'une épaisseur comprise entre 0,5 mm et 6 mm, de préférence entre 1 mm et 4 mm. De manière avantageuse le fond est réalisé en béton de fibre épais (par exemple de 6 à 8 cm d'épaisseur), afin d'obtenir une forte inertie, en réponse au besoin de réduction du bruit. Les récipients peuvent s'étendre sur toute la longueur de l'élément de construction.

A titre d'exemple, l'élément de construction peut être réalisé selon des dimensions normalisées, par exemple d'une hauteur de 1 m et d'une longueur de 3 m, avec une profondeur moyenne de 0,40 m (volume 1,200 m³ environ), avec deux récipients longitudinaux disposés parallèles l'un au-dessus de l'autre, distants d'environ 8 cm à 20 cm afin de couvrir le spectre des fréquences de la masse d'air sous pression enfermée dans la boîte (Figure 2). On rappelle ici que le ralentissement de la masse d'air a le double effet de faciliter le dépôt des particules sur et dans le milieu actif et de réduire le bruit.

Les récipients peuvent avoir une forme de U et être inscriptibles dans un carré de 25 cm x 25 cm environ et la paroi a une épaisseur de 4 à 8 cm. Leur longueur est de l'ordre d'environ 2,7 m à 2,9 m. Le vide intérieur du U, dont les dimensions peuvent varier de 8 cm × 8 cm à 16 cm × 16 cm a une fonction d'amortisseur acoustique. L'élément de construction selon l'invention a des nombreux avantages. Il permet un captage de particules et polluants gazeux relâchés en milieu urbain, proche de leur source. Il utilise un espace qui est de toute manière perdu pour d'autres fonctions, à savoir les murs antibruit, les séparateurs de voies, les dispositifs d'éclairage, poteaux et équipements divers de l'espace urbain. Il est régénérable. Il filtre de manière efficace non seulement les particules fine (de type PM_{2,5} et PM₁), mais aussi des particules de taille plus élevée, et cela quelle que soit leur origine : poussières minérales naturelles, poussières végétales, pollens, particules issues de l'abrasion (pneumatiques, éléments de construction des revêtements de route, garnitures de frein), particules issues de la combustion (poussières minérales, suie, agrégats d'hydrocarbures aromatiques etc.), particules secondaires issues de la recombinaison de particules primaires. Il retient également les composés organiques volatiles et certaines molécules inorganiques (acides : HNO₃, H₂SO₄ ; oxydes : SO₂, SO₃, NO₂).

Pour que ledit élément de construction puisse agir de manière efficace comme dispositif de purification de l'air ambiant, il est préférable que le milieu actif soit constitué de, ou comporte, un matériau présentant un volume poreux supérieur à 0,1 cc/g, de préférence supérieur à 0,2 cc/g, et encore plus préférentiellement supérieur à 0,3 cc/g, pour les pores d'un diamètre compris entre 5 nm et 500 nm.

Le dispositif de purification de l'air ambiant selon l'invention peut fonctionner sans moyens mécaniques pour générer un flux d'air passant par ledit milieu filtrant., c'est-à-dire il peut dépendre entièrement du flux d'air naturel. De manière préférée, il est intégré dans un élément de construction selon l'invention, qui, grâce à la présence d'une espace d'air entre ladite première face de la paroi dirigée vers la source de bruit et le récipient comportant le milieu actif, favorise la circulation de l'air naturelle, et utilise le courant d'air généré par le passage de véhicules à proximité dudit élément de construction.

La figure 2 illustre un autre aspect du système selon l'invention, qui vise à éviter que les eaux de lavage utilisées pour la régénération « sur zone » du milieu actif ne se mélangent avec les eaux pluviales. En effet, dans la plupart des cas, les eaux pluviales collectées dans les égouts des routes ne sont soumises qu'à une purification assez légère avant leur relargage dans la nature. Or, le lavage pour la régénération « sur zone » du milieu actif selon l'invention génère une eau de lavage fortement chargée de particules et de molécules solubles, qu'il serait utile de collecter séparément lors du lavage. A cette fin, le système selon l'invention est doté d'un réceptacle **30** apte à recueillir et stocker des eaux polluées de lavage. Ce réceptacle **30** comporte une portion basse **32** qui peut être plate ou concave ; elle se situe à un niveau plus bas que celui de la chaussée **12.** La fonction de ladite portion basse **32** est de collecter les eaux de lavage qui ruissèlent des récipients lors de leur lavage au jet d'eau. Cette portion basse **32** est délimitée côté trottoir par une portion verticale **31** qui se prolonge vers le haut comme élément vertical de fixation **30** sur lequel peut être fixé élément de structure **1** au moyen de la membrure inférieure **17.** Le réceptacle **30** possède par ailleurs une portion inclinée **33** qui s'étend sur le côté opposé à ladite portion verticale **31** et qui monte de la portion basse **32** vers le niveau de la chaussée **12.** Elle est séparée de la chaussée par un ressaut d'arrêt des eaux pluviales **34** qui évite l'entrée des eaux pluviales dans le réceptacle **30** de récupération des eaux polluées.

Lors de la régénération du milieu actif au jet d'eau les eaux de lavage collectées dans le réceptacle sont aspirées et collectées par le même camion-citerne qui assure le lavage du système selon l'invention pour procéder simultanément au lavage à la lance d'eau des récipients contenant le milieu actif et au pompage et à la récupération de l'eau de lavage polluée qui se rassemble dans la portion basse **32** du réceptacle **30.** Alternativement, on peut utiliser deux camions citernes : un premier qui assure le lavage et, un second qui collecte l'eau de lavage polluée. Cette eau polluée est ensuite acheminée vers une station de traitement.

### Exemples

On a utilisé pour les exemples 1 à 5 un milieu filtrant de β-SiC poreux commercialisé par la société SICAT sous la dénomination SiC1^{™} (voir la brochure commerciale téléchargeable sur https://www.sicatcatalyst.com/products), avec une porosité ouverte qui se présentait sous la forme d'anneaux de dimensions approximatives de 8 mm x 6 mm (voir la figure 4), avec un taux de vide d'environ 67 %.

### Exemple 1 :

Cet exemple vise à établir la capacité du milieu actif à piéger des particules de manière passive (sans circulation forcée d'air). Les anneaux de SiC ont été chargés dans une structure grillagée de longueur 30 cm, hauteur 20 cm, épaisseur 3 cm. Ce piège à particules a été exposé à différents environnements :
- Essai n° 1 : sur la terrasse d'un immeuble surplombant un carrefour routier (hauteur de 10 m par rapport au sol).
- Essai n° 2 : sur la terrasse du premier étage à côté du carrefour routier (hauteur de 3 m par rapport au sol).

Les échantillons du piège de l'essai n° 1 ont été prélevés au bout de 3 semaines et la quantité des particules piégées a été mesurée par pesée, avant et après un traitement de sonication dans l'eau de 15 minutes. Le traitement par sonication permet de déterminer une concentration de particules piégées sur le milieu actif de 2,4 % en masse. Ce résultat indique que le système permet de piéger une masse de 24 g de particules, toutes sources confondues, par kilogramme de milieu actif.

Les échantillons du piège de l'essai n° 2 ont été prélevés également au bout de 3 semaines et la quantité des particules piégées a été mesurée par pesée, avant et après un traitement de sonication de 15 minutes. Le traitement par sonication permet de déterminer une concentration de particules piégées sur le milieu actif de 0,9 % en masse. Ce résultat indique que le système permet de piéger une masse de 9 g de particules, toutes sources confondues, par kilogramme de milieu actif.

La morphologie des anneaux a été caractérisée par microscopie électronique à balayage (MEB) ; les résultats sont présentés sur la Figure 8 (correspondant à l'essai 1). On constate que le piégeage des particules modifie la morphologie de la surface du milieu actif. La surface initiale comporte des rayures (sous formes de vaguelettes) consécutives à la technique de fabrication par extrusion et une certaine porosité propre à la méthode de production du SiC (Figure 8, A à C). Après piégeage la morphologie de la surface est fortement modifiée et on n'observe plus les formes de vaguelettes (ou du moins elles sont fortement atténuées) (Figure 8, D à F). On note également la présence d'amas solides (Figure 8D) sur la surface du filtre qui proviennent des particules ou composés qui sont piégés sur le filtre. L'échantillon après lavage par jet d'eau pendant deux minutes présente une morphologie proche de celle de l'échantillon de départ indiquant l'efficacité du lavage par un jet d'eau à basse pression (Figure 8, G à I).

Les échantillons après piégeage ont été analysés par cartographie élémentaire au MEB. On a observé la présence d'azote (1 %) sur l'échantillon dans les deux essais ; l'azote pourrait provenir des composés azotés captés pendant les essais. Les analyses révèlent aussi la présence de métaux tels que Ni (1 %), Cu (1 %) et Pb (1 %) dans l'essai n° 1 et Fe (1 %), Zn (0.5 %) et Sn (1 %) dans l'essai n° 2, ces indications étant données en pourcentages massiques.

### Exemple 2 :

Dans cet exemple le système filtrant est constitué par un empilement d'anneaux de SiC dans une structure tubulaire grillagée où l'air chargé en particules et autres composés associés est aspiré par une tubulure centrale. Le schéma du dispositif est présenté sur la Figure 6A. Le dispositif est opéré sous pompage continue avec un débit de 1,5 L/min pour une masse d'anneaux filtrants de 20 g pendant une période de deux semaines. Le volume total d'air aspiré à travers le système s'élève à 30 m³. En tenant compte des données publiées par les services d'analyse de l'air de l'agglomération les teneurs moyennes en particules PM₁₀ et PM_{2,5} sont de 30 µg/m³ et 20 µg/m³ respectivement, on calcule une teneur totale de particules PM₁₀ et PM_{2,5} passant à travers le filtre de 0,9 mg. Les analyses par thermogravimétrie réalisées sur l'échantillon après utilisation confirment la présence de 1,2 % de matière combustible retenue sur le filtre, ce qui équivaut à une masse totale de 240 mg. En comparant les résultats théoriques obtenus à partir des données des services d'analyse et ceux obtenus par analyse thermogravimétrie on arrive à la conclusion que la masse retenue par le filtre est supérieure à la totalité des PM₁₀ et PM2,5 contenues dans le volume d'air ayant traversé le filtre. Ce résultat indique qu'outre les particules PM₁₀ et PM_{2,5} le filtre a également retenue des particules de taille supérieure à 10 µm.

Ces résultats confirment l'excellence performance du système filtrant mis en place dans cette invention. Les particules piégées sur le filtre ont été extraites par ultrasons dans un mélange contenant 80% d'eau distillée et de 20% d'éthanol pendant 30 minutes. La solution devient grisâtre après un traitement par ultrason de 30 minutes dû au fait que les particules qui ont été piégées sur le filtre ont été redispersées dans la solution (Figure 6B).

Les particules qui ont été relarguées lors du traitement par ultrasons ont été récupérées et analysées par microscopie optique. La morphologie du filtre avant piégeage observée par microscopie optique est présentée sur la Figure 6C et D. On peut voir l'alternance de zones claire et floue qui représentent les rayures sur la surface du SiC et qui engendrent les zones floues lors de la mise au point du microscope. Après filtration la surface devient plus plane, car les particules ou composés adsorbés sur le filtre réduisent la rugosité du matériau (en comblant les rayures) et de ce fait l'image est nette car la mise au point peut être réalisée sur une surface plane (Figure 6E et F). La distribution des particules piégées sur le filtre puis récupérées par sonication est présentée sur les Figures 6G et 6H. On constate que les particules ont des tailles extrêmement variées indiquant que le système filtrant mis en place est capable de piéger une large gamme de particules contenues dans l'air urbain ce qui n'est pas le cas pour d'autres systèmes filtrant où seule une taille spécifique de particules pourrait être piégée.

### Exemple 3 :

Cet exemple vise à démontrer la capacité de filtration d'un récipient utilisé dans un élément de construction selon l'invention. Un récipient selon l'invention a été préparé avec une grille métallique perméable à l'air ; les dimensions du récipient étaient : longueur 20 cm, hauteur 15 cm, épaisseur 3 cm (volume utile de 0,9 litre). Ce récipient a été traversé par un courant d'air avec une vitesse moyenne de 15 km/h en milieu urbain pollué, ce qui donne un volume total traité de 450 m³ d'air pollué par heure. Le milieu actif était constitué par des anneaux en SiC, décrits ci-dessus.

Après 10 h de fonctionnement, les anneaux utilisés ont été soumis à un traitement par ultrasons afin de récupérer les particules fixées sur le milieu actif. La phase liquide est devenue grisâtre après le traitement par ultrasons dû au largage des particules piégées sur le milieu actif. La Figure 7A montre le résidu récupéré après le traitement ultrasons. En tenant compte des données publiées par les services d'analyse de l'air de l'agglomération les teneurs moyennes en particules PM₁₀ et PM_{2,5} sont de 30 µg/m³ et 20 µg/m³ respectivement ; cela correspond à une teneur totale de particules PM₁₀ et PM_{2,5} passant à travers le filtre de 135 mg. Les analyses par pesée du filtre, après test et après un traitement par ultrasons de 60 minutes indiquent la présence de 550 mg de matière retenue sur le filtre. En comparant les résultats théoriques obtenus à partir des données des services d'analyse et ceux obtenus expérimentalement on est arrivé à la conclusion que la masse retenue sur le filtre est supérieure à la masse totale des particules PM₁₀ et PM_{2,5} contenues dans le volume d'air ayant traversé le filtre. L'excédent de masse s'explique par le fait que le système filtrant ne capte pas seulement les particules PM_{2,5} et PM₁₀ mais également d'autres résidus se trouvant dans l'air, par exemple, pollens, particules s'agrégées autour des gouttelettes de condensation ou de sève.

La solution concentrée récupérée après le traitement ultrason était légèrement jaunâtre avec des suspensions dans la partie surnageant et des sédiments comme indique la figure 7A. La figure 7B montre la micrographie électronique à balayage des résidus récupérés après le traitement d'ultrasons dans le surnageant tandis que les particules se trouvant dans le sédiment sont présentées sur la Figure 7C. Ces images indiquent la présence de particules avec une distribution de tailles relativement large qui peuvent être des particules primaires ou des particules qui se sont agrégées lors de leur séjour dans l'atmosphère ou après captation par le système filtrant. Les micrographies des particules de taille et de formes différentes qui sont retenues sur le filtre sont présentées sur les micrographies électroniques à balayage sur les Figures 7D pour le surnageant) et 7E (pour les particules sédimentées). Ces images confirment la forte disparité des particules captées et montrent aussi la présence de très petites particules, de taille allant de 40 nm à 100 nm (Figures 7D et E), et qui ne sont pas comptabilisées dans les normes. Ces particules sont pour la plupart du temps agrégées avec d'autres particules de taille plus importante et se retrouvent dans le sédiment récupéré après le traitement par ultrason (figure 7C). Il est à rappeler que ces particules submicroniques, voire nanoscopiques, sont très dangereuses pour la santé compte tenu du fait qu'elles pénètrent très loin dans le système respiratoire. Il est à rappeler aussi que ces particules ne représentent qu'une masse négligeable dans les analyses du filtre après test compte tenu de leurs tailles extrêmement petites.

Les résultats présentés dans cet exemple confirment l'extrême efficacité du système filtrant pour le piégeage de particules, de tailles extrêmement variables, présentes dans l'air urbain.

### Exemple 4 :

Dans cet exemple la capacité des dispositifs de piégeage décrits ci-dessus pour le captage des polluants organiques a été évaluée. Le filtre est à base d'anneaux de SiC déjà décrit ci-dessus et le système de filtre utilisé dans cet exemple est identique à celui utilisé dans l'Exemple 2.

Un test à blanc a été effectué : les anneaux de SiC ont été nettoyés par des bains successifs avec de l'acétone et du méthanol avant d'être séchés à l'étuve emballés dans de l'aluminium. 10 g de SiC ont été recueillis et ont été extraits par la technique ASE (extraction accélérée par solvant) puis analysé par chromatographie en phase gazeuse couplée à la spectrométrie de masse en tandem. L'analyse de ce milieu actif de SiC n'a pas permis de détecter de polluants organiques (HAPs, PCBs et phtalates et pesticides). Ceci montre que les anneaux qui ont été exposés à cette procédure de nettoyage sont exempts de toute trace de polluants organiques.

Ensuite, des essais de captage des polluants organiques ont été effectués. Le filtre est placé dans deux endroits différents : Dans le dispositif 1, le filtre est placé à une hauteur d'environ 2 m avec la face filtrante orientée vers une rue passante, alors que dans le dispositif 2, le filtre est positionné à une hauteur de 2 m et dans un endroit situé perpendiculaire et à environ 3 m de la rue. Après 3 semaines d'exposition à l'air urbain les anneaux ont à nouveau été extraits et analysés selon la même méthode que celle utilisée pour le test à blanc. Les résultats obtenus montrent que des HAPs ont pu être piégés sur le filtre ; la composition des différents produits est présentée sur le Tableau 1.

**Tableau 1 : Concentration des différents produits organiques gazeux récupérés sur les milieux actifs en SiC en fonction de la position du filtre par rapport à une rue passante avec circulation de véhicules à moteur**

| | Dispositif 1 | Dispositif 2 |
|---|---|---|
| Volume d'air total filtré [m³] | 30 m³ | 30 m³ |
| Naphtalène [ng/g] | 8,8 | Traces |
| Acénaphthène [ng/g] | 10,9 | 2,7 |
| Anthracène [ng/g] | - | 2,7 |
| Chrysène [ng/g] | 2,3 | - |
| Pyrène [ng/g] | 1,3 | 1,6 |
| Benzo(k) fluoranthène [ng/g] | 1,1 | 0,7 |
| Benzo(e)pyrène [ng/g] | 1,30 | 1,9 |
| Benzo(a)pyrène [ng/g] | 2,20 | 0,85 |
| Dibenzo(a,h)anthracène [ng/g] | Traces | - |

Il a pu ainsi être démontré la capacité de captage de polluants organiques du milieu actif selon l'invention. A noter que quelques PCBs et quelques pesticides ont été observés également mais avec des teneurs très en dessous de limites de quantification. Ces résultats sont en accord avec les prélèvements d'air standards où en zone urbaine les HAPs sont les espèces prédominantes.

### Exemple 5 :

Les anneaux utilisés dans l'exemple 1 ont également été caractérisés après utilisation pour évaluer la quantité de nitrates et de sulfates captée pendant l'essai.

On a prélevé 5,2799 g d'anneaux SiC utilisés comme milieu filtrant dans l'exemple 1. Cet échantillon a ensuite été lavé selon une séquence de quatre extractions sous ultrasons dans de l'eau pure (respectivement avec 20 ml, 20 ml, 40 ml et 80 ml d'eau dé-ionisée, pendant respectivement 30 min, 15 min, 15 min et 15 min sous ultrasons). Après extraction, la masse des anneaux n'était plus que de 5,2062 g, ce qui représente une perte de masse de 1,41 %. On a observé que le premier extrait liquide était très noir alors que les suivants l'étaient de moins en moins.

Les quatre extraits ont ensuite été mélangés puis concentrés dans un évaporateur rotatif. La solution concentrée a ensuite été filtrée trois fois sur papier filtre de 0,22 µm puis analysée par chromatographie ionique. La solution finale représentait un volume de 30 ml et les résultats indiquent qu'elle contenait respectivement 4,46 mg et 11,77 mg d'anions NO₃⁻ et SO₄²⁻, ce qui, rapporté à un kilogramme d'anneaux SiC, représente une rétention de 0,86 g de NO₃⁻ et 2,3g de SO₄²⁻.

### Exemple 6 :

Trois milieux filtrants ont été testés comparativement pour le piégeage de particules en suspension dans l'air ambiant:
(1) Carbone poreux commercialisé sous la dénomination mesoC+^{™} par la société SICAT (https://www.sicatcatalyst.com/carbon) ;
(2) β-SiC poreux identique à celui déjà utilisé dans les exemples 1 à 5 ;
(3) Produit céramique MacroTrap^{®} XPore 80 ^{™} commercialisé par la société Saint-Gobain Norpro (https://www.norpro.saint-gobain.com/bed-topping-media/ macrotrap-guard-bed-media).

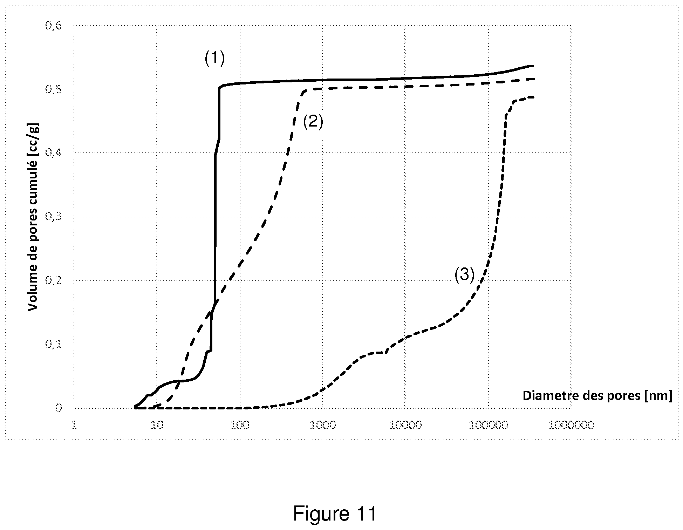

Les matériaux se présentent sous la forme d'anneaux dont les dimensions, similaires, sont données dans le tableau 2. Leur distribution poreuse, obtenue par la technique d'intrusion de mercure, est illustrée sur la figure 11. Elle indique que les trois matériaux disposent d'un volume poreux total similaire, mais que cette porosité est formée par des pores de taille différente : entre 10 nm et 80 nm pour le mesoC+^{™} (courbe (1)), entre 10 nm et 600 nm pour le β-SiC, (courbe (2)), et entre 600 nm et 180 µm pour le MacroTrap^{®} (courbe (3)). Le volume poreux correspondant aux pores de diamètre compris entre 5 nm et 500 nm est négligeable pour le produit MacroTrap^{®} , alors qu'il est prépondérant pour les deux autres matériaux.

**Tableau 2 : Forme macroscopique des morceaux constituant le milieu actif**

| | Diamètre extérieur [mm] | Diamètre intérieur [mm] | Longueur [mm] | Attrition selon ASTM D 4058 [%] |
|---|---|---|---|---|
| mesoC+^{™} (courbe (1)) | 7 | 4 | 5 | 1,3 |
| β-SiC (courbe (2)) | 8 | 6 | 5 | NM |
| MacroTrap^{®} (courbe (3)) | 8 | 3 | 7 | 34,1 |
| NM : non mesuré | | | | |

Les anneaux de mesoC+^{™} et de MacroTrap^{®}de ont été chargés séparément dans des paniers en grille d'acier identiques de 20,0 cm de côté et 3,0 cm d'épaisseur et exposés simultanément sur une terrasse protégée de la pluie à 10 mètres de hauteur surplombant un carrefour à grande circulation dans la ville de Strasbourg (France).

Après exposition, les anneaux sont déchargés des paniers et séchés en étuve à 130°C jusqu'à stabilisation de leur masse (masse Mᵢ). Après séchage, les anneaux sont placés dans de l'eau bouillante pendant 30 minutes afin de décrocher les particules piégées. On filtre l'eau sur un tamis de 150 microns et on récupère les anneaux qui sont de nouveau séchés en étuve à 130°C jusqu'à stabilisation de leur masse (masse M_{f}).

On calcule la masse de particules piégées par la perte de masse lors du lavage (Mᵢ-M_{f}).

Après 43 jours d'exposition, le lavage des anneaux de MacroTrap^{®} engendre une perte de masse de 0,070%. Compte tenu de la faible résistance du MacroTrap^{®} vis-à-vis de l'attrition (comme indiqué dans le tableau 2), une partie de cette perte de poids est attribuée à la génération de poussière par attrition du MacroTrap lors du traitement dans l'eau bouillante. On en déduit que les anneaux de MacroTrap^{®} ont piégés en moyenne moins de 0,016 g de particules sèches par kg de MacroTrap^{®} et par jour.

L'exposition des anneaux de mesoC+^{™} a été prolongée jusqu'à 51 jours. A l'issue de cette exposition, le lavage des anneaux de mesoC+^{™} engendre une perte de poids de 0,64%. Puisque le mesoC+^{™} est particulièrement résistant à l'attrition (voir tableau 2), la totalité de la perte de masse est attribuée à l'extraction de particules piégées au cours de l'exposition. On en déduit que les anneaux de mesoC+^{™} ont piégés 0,72 g de particules sèches en 51 jours d'exposition, soit une moyenne de 0,13 g de particules sèches piégées par kg de mesoC+^{™} et par jour.

Ces résultats montrent que contre toute attente, le MacroTrap^{®} qui est commercialisé pour sa grande capacité à piéger des particules est pourtant nettement moins efficace que le mesoC+^{™} pour le piégeage des particules en suspension dans l'air. Cette différence est attribuée à des gammes de dimensions poreuses différentes.

A titre de comparaison, l'exemple 1 donne des résultats obtenus avec le β-SiC après une exposition sur la même terrasse, mais à une période différente et en utilisant des conditions de quantification des particules piégées différentes de celles utilisées pour le mesoC+^{™} et le MacroTrap^{®}. On mesure sur le β-SiC une efficacité moyenne de piégeage des particules en suspension dans l'air de 1,1 g de particules humides piégées par kg de SiC et par jour.

## Revendications

1. Elément de construction (1), notamment pour milieu urbain routier, destiné à purifier l'air et à amortir le bruit émis par une source de bruit (10) à proximité de voies de circulation routière ou ferroviaire, comprenant
- une paroi (2) définissant une première face (3) destinée à être tournée vers ladite source de bruit (10) et une deuxième face (4) destinée à être opposée à ladite source de bruit (10),
- au moins un récipient (5) comprenant un milieu actif (6) accessible à l'air ambiant et comprenant un milieu filtrant, ledit milieu actif (6) présentant avantageusement des cavités (24) accessibles à l'air ambiant, où ledit au moins un récipient (5)
- prend la forme d'un panier présentant une face creuse (20),
- est disposé du côté de ladite première face (3) de ladite paroi (2) tournée vers ladite source de bruit (10), ladite face creuse (20) étant dirigée vers ladite première face (3), et
**caractérisé en ce que** le récipient (5) est disposé à distance de ladite paroi (2) tel que ledit élément de construction (1) présente un espace d'air (9) entre ladite première face (3) de la paroi (2) dirigée vers la source de bruit (10) et ledit récipient (5).

2. Elément de construction (1) selon la revendication 1, **caractérisé en ce que** ledit récipient (5) présente une base (23), opposée à ladite face creuse (20), ladite base (23) étant dirigée vers la direction opposée à celle de la face creuse (20) et accessible à l'air ambiant.

3. Elément de construction (1) selon la revendication 1 ou 2, **caractérisé en ce qu'**il comprend une pluralité de récipients (5) disposés à des distances différentes de ladite paroi (2).

4. Elément de construction (1) selon l'une quelconque des revendications 1 à 3, **caractérisé en ce que** ledit milieu actif (6)
- comporte des pièces ou morceaux ou granules (22) de milieu actif (6) qui sont disposées dans ledit récipient (5), de préférence dans une orientation désordonnée, ou
- est constitué d'un monolithe formé par une mousse alvéolaire ou un milieu contenant des cavités connectées entre elles pour former une structure creuse.

5. Elément de construction (1) selon l'une quelconque des revendications 1 à 4, **caractérisé en ce que** ledit milieu actif (6) est constitué de, ou comporte, un matériau sélectionné dans le groupe formé par : l'alumine, le carbure de silicium, notamment de structure béta, la silice, le carbone, la zircone, les aluminosilicates, les ciments ou leur combinaison.

6. Elément de construction (1) selon l'une quelconque des revendications 1 à 5, **caractérisé en ce que** ladite paroi (2) présente une forme galbée concave, la face concave étant dirigée vers la source de bruit (10).

7. Elément de construction (1) selon l'une quelconque des revendications 5 à 6, **caractérisé en ce que** lesdites pièces ou morceaux (22) ou granules de milieu actif (6) présentent une plus grande dimension extérieure comprise entre 0,2 cm et 5,0 cm, préférentiellement comprise entre 0,3 cm et 4,0 cm, plus préférentiellement entre 0,4 cm et 3,0 cm, et encore plus préférentiellement entre 0,5 cm et 2,0 cm .

8. Elément de construction (1) selon l'une quelconque des revendications 5 à 7, **caractérisé en ce que** lesdites pièces ou morceaux (22) ou granules de milieu actif (6) forment un empilement avec un taux de vide compris entre 26 % et 75 %, préférentiellement compris entre 35 % et 75 %, encore plus préférentiellement entre 45 % et 75 %, et de manière encore plus préférée entre 55 % et 75 %.

9. Elément de construction (1) selon l'une quelconque des revendications 1 à 8, **caractérisé en ce que** ledit récipient (5) comporte au moins une paroi ou grille (21) perméable à l'air, apte à retenir lesdites pièces ou morceaux (22) de milieu actif (6).

10. Elément de construction (1) selon l'une quelconque des revendications 1 à 8, **caractérisé en ce que** ledit récipient (5) présente une forme en « U », avec une base (23) et des bras (26,26b) à double paroi, remplis de pièces ou morceaux (22) de milieu actif (6) et accessible à l'air ambiant.

11. Système de protection contre le bruit et de purification de l'air, notamment pour milieu urbain routier, souterrains ou tunnel routier, ou bâtiment aménagé pour le stationnement de véhicules à moteur, ledit système étant destiné à purifier l'air et à amortir le bruit émis par une source de bruit à proximité de voies de circulation routière ou ferroviaire, **caractérisé en ce qu'**il comprend au moins un élément de construction (1) selon l'une quelconque des revendications 1 à 10.

12. Système de protection selon la revendication 11, **caractérisé en ce que** ledit élément de construction (1) est disposé de manière à ce que la face (3) destinée à être dirigée vers ladite source de bruit (10) soit dirigée vers ladite source de bruit (10), et la face (4) destinée à être dirigée dans une direction opposée à ladite source de bruit (10) soit dirigée dans une direction opposée à ladite source de bruit (10).

13. Système de protection selon l'une quelconque des revendications 11 à 12, **caractérisé en ce que** ledit élément de construction (1) est intégré dans un mur anti-bruit ou dans le caniveau d'évacuation.

14. Système de protection selon l'une quelconque des revendications 11 à 13, **caractérisé en ce qu'**il comprend un système d'aspiration forcé de l'air capable d'aspirer l'air à travers ledit milieu actif (6).

15. Système de protection selon l'une quelconque des revendications 11 à 14, **caractérisé en ce qu'**il comprend un réceptacle (30) apte à recueillir et stocker des eaux polluées de lavage, ledit réceptacle (30) comportant une portion basse (32) qui peut être horizontale ou concave, apte à collecter les eaux de lavage qui ruissèlent des récipients lors de leur lavage, ladite portion basse (32) étant délimitée côté trottoir par une portion verticale (31) et côté chaussée par une portion inclinée (33) qui s'étend sur le côté opposé à ladite portion verticale (31) et qui est séparée de la chaussée par un ressaut d'arrêt des eaux pluviales (34) apte à éviter l'entrée des eaux pluviales dans le réceptacle (30) de récupération des eaux polluées.

## Patentansprüche

1. Bauelement (1), insbesondere für eine Stadtstraßenumgebung, zur Reinigung der Luft und Dämpfung des von einer Lärmquelle (10) ausgehenden Lärms in der Nähe von Straßen- oder Schienenzirkulationswegen, umfassend
- eine Wand (2), die eine erste Fläche (3) definiert, die bestimmt ist, zu der Lärmquelle (10) gedreht zu sein, und eine zweite Fläche (4), die bestimmt ist, entgegengesetzt zu der Lärmquelle (10) zu sein,
- mindestens einen Behälter (5), der ein für die Umgebungsluft zugängliches aktives Medium (6) umfasst und ein Filtermedium umfasst, wobei das aktive Medium (6) in vorteilhafter Weise für die Umgebungsluft zugängliche Hohlräume (24) aufweist,
wobei der mindestens eine Behälter (5)
- die Form eines Korbs annimmt, der eine hohle Fläche (20) aufweist,
- auf der Seite der ersten Fläche (3) der Wand (2) angeordnet ist, die zu der Lärmquelle (10) gedreht ist, wobei die hohle Fläche (20) zu der ersten Fläche (3) gerichtet ist, und
**dadurch gekennzeichnet, dass** der Behälter (5) derart von der Wand (2) beabstandet angeordnet ist, dass das Bauelement (1) einen Luftraum (9) zwischen der ersten Fläche (3) der Wand (2), die zu der Lärmquelle (10) gerichtet ist, und dem Behälter (5) aufweist.

2. Bauelement (1) nach Anspruch 1, **dadurch gekennzeichnet, dass** der Behälter (5) eine Basis (23) entgegengesetzt zu der hohlen Fläche (20) aufweist, wobei die Basis (23) in die zu der der hohlen Fläche (20) entgegengesetzte Richtung gerichtet und für die Umgebungsluft zugänglich ist.

3. Bauelement (1) nach Anspruch 1 oder 2, **dadurch gekennzeichnet, dass** es eine Vielzahl von Behältern (5) umfasst, die in unterschiedlichen Abständen von der Wand (2) angeordnet sind.

4. Bauelement (1) nach einem der Ansprüche 1 bis 3, **dadurch gekennzeichnet, dass** das aktive Medium (6)
- Teile oder Stücke oder Granulate (22) aktiven Mediums (6) aufweist, die in dem Behälter (5) vorzugsweise in einer ungeordneten Ausrichtung angeordnet sind, oder
- aus einem Monolith besteht, der von einem Wabenschaumstoff oder einem Medium gebildet ist, das miteinander verbundene Hohlräume enthält, um eine hohle Struktur zu bilden.

5. Bauelement (1) nach einem der Ansprüche 1 bis 4, **dadurch gekennzeichnet, dass** das aktive Medium (6) aus einem Material besteht oder aufweist, das aus der Gruppe ausgewählt ist, die aus Aluminiumoxid, Siliciumcarbid, insbesondere mit Beta-Struktur, Siliciumoxid, Kohlenstoff, Zirkonoxid, den Aluminosilikaten, den Zementen oder deren Kombinationen gebildet ist.

6. Bauelement (1) nach einem der Ansprüche 1 bis 5, **dadurch gekennzeichnet, dass** die Wand (2) eine konkave gekrümmte Form aufweist, wobei die konkave Fläche zu der Lärmquelle (10) gerichtet ist.

7. Bauelement (1) nach einem der Ansprüche 5 bis 6, **dadurch gekennzeichnet, dass** die Teile oder Stücke (22) oder Granulate aktiven Mediums (6) eine größere Außenabmessung aufweisen, die zwischen 0,2 cm und 5,0 cm liegt, vorzugsweise zwischen 0,3 cm und 4,0 cm, vorzugsweiser zwischen 0,4 cm und 3,0 cm und noch vorzugsweiser zwischen 0,5 cm und 2,0 cm liegt.

8. Bauelement (1) nach einem der Ansprüche 5 bis 7, **dadurch gekennzeichnet, dass** die Teile oder Stücke (22) oder Granulate aktiven Mediums (6) einen Stapel mit einem Leeranteil bilden, der zwischen 26 % und 75 % liegt, vorzugsweise zwischen 35 % und 75 %, noch vorzugsweiser zwischen 45 % und 75 % und noch bevorzugter zwischen 55 % und 75 % liegt.

9. Bauelement (1) nach einem der Ansprüche 1 bis 8, **dadurch gekennzeichnet, dass** der Behälter (5) mindestens eine luftdurchlässige Wand oder Gitter (21) aufweist, die/das imstande ist, die Teile oder Stücke (22) aktiven Mediums (6) zurückzuhalten.

10. Bauelement (1) nach einem der Ansprüche 1 bis 8, **dadurch gekennzeichnet, dass** der Behälter (5) eine "U"-Form mit einer Basis (23) und Schenkeln (26, 26b) mit Doppelwand aufweist, gefüllt mit Teilen oder Stücken (22) aktiven Mediums (6) und für die Umgebungsluft zugänglich.

11. System zum Schutz gegen Lärm und zur Reinigung der Luft, insbesondere für eine Stadtstraßen-, unterirdische oder Straßentunnel- oder Gebäudeumgebung, die zum Abstellen von Motorfahrzeugen eingerichtet ist, wobei das System zur Reinigung der Luft und Dämpfung des von einer Lärmquelle ausgehenden Lärms in der Nähe von Straßen- oder Schienenzirkulationswegen bestimmt ist, **dadurch gekennzeichnet, dass** es mindestens ein Bauelement (1) nach einem der Ansprüche 1 bis 10 umfasst.

12. Schutzsystem nach Anspruch 11, **dadurch gekennzeichnet, dass** das Bauelement (1) derart angeordnet ist, dass die Fläche (3), die bestimmt ist, zu der Lärmquelle (10) gerichtet zu sein, zu der Lärmquelle (10) gerichtet ist, und die Fläche (4), die bestimmt ist, in eine Richtung entgegengesetzt zu der Lärmquelle (10) gerichtet zu sein, in eine Richtung entgegengesetzt zu der Lärmquelle (10) gerichtet ist.

13. Schutzsystem nach einem der Ansprüche 11 bis 12, **dadurch gekennzeichnet, dass** das Bauelement (1) in eine Lärmschutzmauer oder in den Entwässerungskanal integriert ist.

14. Schutzsystem nach einem der Ansprüche 11 bis 13, **dadurch gekennzeichnet, dass** es ein Zwangsbelüftungssystem umfasst, das in der Lage ist, durch das aktive Medium (6) Luft anzusaugen.

15. Schutzsystem nach einem der Ansprüche 11 bis 14, **dadurch gekennzeichnet, dass** es eine Aufnahme (30) umfasst, die imstande ist, verschmutztes Reinigungswasser aufzufangen und zu speichern, wobei die Aufnahme (30) einen unteren Abschnitt (32) aufweist, der horizontal oder konkav sein kann, der imstande ist, das Reinigungswasser zu sammeln, die aus den Behältern fließen, während sie gereinigt werden, wobei der untere Abschnitt (32) gehwegseitig von einem vertikalen Abschnitt (31) und fahrbahnseitig von einem geneigten Abschnitt (33) begrenzt ist, der sich auf der zum vertikalen Abschnitt (31) entgegengesetzten Seite erstreckt und der von der Fahrbahn durch einen Regenwasserrückhaltevorsprung (34) getrennt ist, der imstande ist, den Eintritt von Regenwasser in die Aufnahme (30) zur Rückgewinnung von Schmutzwasser zu verhindern.

## Claims

1. A building element (1), in particular for an urban road environment, intended to purify the air and to dampen the noise emitted by a noise source (10) near road or rail traffic lanes, comprising
- a wall (2) defining a first face (3) intended to be turned towards said noise source (10) and a second face (4) intended to be opposite said noise source (10),
- at least one container (5) comprising an active medium (6) accessible to ambient air and comprising a filtering medium, said active medium (6) advantageously having cavities (24) accessible to ambient air,
wherein said at least one container (5)
- takes the shape of a basket having a hollow face (20),
- is disposed on the side of said first face (3) of said wall (2) turned towards said noise source (10), said hollow face (20) being directed towards said first face (3), and
**characterised in that** the container (5) is disposed at a distance from said wall (2) such that said building element (1) has an air gap (9) between said first face (3) of the wall (2) directed towards the noise source (10) and said container (5).

2. The building element (1) according to claim 1, **characterised in that** said container (5) has a base (23), opposite said hollow face (20), said base (23) being directed towards the direction opposite that of the hollow face (20) and accessible to the ambient air.

3. The building element (1) according to claim 1 or 2, **characterised in that** it comprises a plurality of containers (5) disposed at different distances from said wall (2).

4. The building element (1) according to any one of claims 1 to 3, **characterised in that** said active medium (6)
- includes pieces or chunks or granules (22) of active medium (6) which are disposed in said container (5), preferably in a disordered orientation, or
- consists of a monolith formed by a cellular foam or a medium containing cavities connected together to form a hollow structure.

5. The building element (1) according to any one of claims 1 to 4, **characterised in that** said active medium (6) consists of, or includes, a material selected from the group formed by: alumina, silicon carbide, in particular of beta structure, silica, carbon, zirconia, aluminosilicates, cements or a combination thereof.

6. The building element (1) according to any one of claims 1 to 5, **characterised in that** said wall (2) has a concave curved shape, the concave face being directed towards the noise source (10).

7. The building element (1) according to any one of claims 5 to 6, **characterised in that** said pieces or chunks (22) or granules of active medium (6) have a greatest external dimension comprised between 0.2 cm and 5.0 cm, preferably comprised between 0.3 cm and 4.0 cm, more preferably between 0.4 cm and 3.0 cm, and even more preferably between 0.5 cm and 2.0 cm.

8. The building element (1) according to any one of claims 5 to 7, **characterised in that** said pieces or chunks (22) or granules of active medium (6) form a stack with a void ratio comprised between 26% and 75%, preferably comprised between 35% and 75%, even more preferably between 45% and 75%, and even more preferably between 55% and 75%.

9. The building element (1) according to any one of claims 1 to 8, **characterised in that** said container (5) includes at least one wall or grid (21) which is permeable to air, capable of retaining said pieces or chunks (22) of active medium (6).

10. The building element (1) according to any one of claims 1 to 8, **characterised in that** said container (5) has a "U" shape, with a double-walled base (23) and arms (26, 26b), filled with pieces or chunks (22) of active medium (6) and accessible to ambient air.

11. A noise protection and air purification system, in particular for urban road environments, underground passages or road tunnels, or a building fitted out for the parking of motor vehicles, said system being intended to purify the air and to dampen the noise emitted by a noise source near the road or rail traffic lanes, **characterised in that** it comprises at least one building element (1) according to any one of claims 1 to 10.

12. The protection system according to claim 11, **characterised in that** said building element (1) is disposed so that the face (3) intended to be directed towards said noise source (10) is directed towards said noise source (10), and the face (4) intended to be directed in a direction opposite said noise source (10) is directed in a direction opposite said noise source (10) .

13. The protection system according to any one of claims 11 to 12, **characterised in that** said building element (1) is integrated into a noise barrier or into the drainage channel.

14. The protection system according to any one of claims 11 to 13, **characterised in that** it comprises a forced air suction system capable of sucking air through said active medium (6).

15. The protection system according to any one of claims 11 to 14, **characterised in that** it comprises a receptacle (30) capable of collecting and storing polluted washing water, said receptacle (30) including a lower portion (32) which can be horizontal or concave, capable of collecting the washing water which trickles from the containers during their washing, said lower portion (32) being delimited on the pavement side by a vertical portion (31) and on the road side by an inclined portion (33) which extends on the side opposite said vertical portion (31) and which is separated from the road by a rainwater stop projection (34) capable of preventing the entry of rainwater into the receptacle (30) for recovering polluted water.
